# EUROPÄISCHE PATENTSCHRIFT

(11) **EP 4 499 721 B1**
(45) Veröffentlichungstag und Bekanntmachung des Hinweises auf die Patenterteilung: **14.01.2026**
(21) Anmeldenummer: 23710787.5
(22) Anmeldetag: 20.03.2023
(51) Int. Cl.: C08G 18/10, C08G 18/48, C08G 18/76, C08G 18/42, C08G 18/24, C08G 18/72, C09D 175/08, C09D 175/06

(54) **FEUCHTIGKEITSHÄRTENDER SCHEIBENKLEBSTOFF AUF POLYURETHANBASIS**
MOISTURE-CURING POLYURETHANE-BASED WINDOW ADHESIVE
ADHÉSIF DURCISSANT À L'HUMIDITÉ À BASE DE POLYURÉTHANE POUR VITRES

(30) Priorität: 25.03.2022 EP 22164584
(43) Veröffentlichungstag der Anmeldung: 05.02.2025
(73) Patentinhaber: Sika Technology AG, 6340 Baar (CH)
(72) Erfinder: GAILLARD, Geraldine, 8005 Zürich (CH); GATTI, Michele, 5070 Frick (CH)
(74) Vertreter: Sika Patent Attorneys
(86) Internationale Anmeldenummer: PCT/EP2023/056983
(87) Internationale Veröffentlichungsnummer: WO 2023/180217

(56) Entgegenhaltungen:
- WO-A1-2020/030608
- WO-A1-2020/201419
- WO-A1-2020/201421

## Beschreibung

### Technisches Gebiet

Die Erfindung betrifft feuchtigkeitshärtende Polyurethan-Zusammensetzungen und ihre Anwendung als elastische Klebstoffe, insbesondere für die Verglasung von Fahrzeugen.

### Stand der Technik

Härtbare Zusammensetzungen auf Basis von Polyurethanen werden oft als Klebstoffe für elastische Verklebungen eingesetzt, beispielsweise im Fahrzeugbau. Beliebt sind vor allem einkomponentige feuchtigkeitshärtende Systeme, vor allem aufgrund ihrer einfachen Handhabung. Solche werden beispielsweise für die Direktverglasung von Fahrzeugen eingesetzt. Für diese Anwendung ist es jedoch wichtig, dass die Klebstoffe bestimmte Eigenschaften aufweisen. Neben einer guten, dauerhaften Adhäsion auf Substraten wie Fahrzeuglack, Glas und/oder Siebdruckkeramik müssen sie auch eine gute Anfangsfestigkeit aufweisen und vor dem Aushärten nicht zum Abrutschen neigen. Für diese Klebeanwendungen ist es erforderlich, dass die Klebeverbindung unmittelbar nach der Applikation des Klebstoffs einer gewissen mechanischen Belastung ausgesetzt werden kann, beispielsweise weil die verklebten Bauteile bewegt oder eine Fixierhilfe entfernt werden sollen. Um solche frühzeitigen Belastungen zu ermöglichen, soll die Klebeverbindung eben eine gute sogenannte Anfangsfestigkeit aufweisen, das heisst in bestimmter Weise belastbar sein zu einem Zeitpunkt, an dem der Klebstoff chemisch noch nicht ausgehärtet ist. Dies ist beispielsweise wichtig bei Scheibenverklebungen im Automobilbau, wo die eingesetzte Scheibe im frisch applizierten Klebstoff nicht abrutschen darf. Trotzdem sollen die Klebstoffe jedoch eine genügend tiefe Viskosität aufweisen, dass sie problemlos beispielsweise durch Pumpen gefördert und appliziert werden können.

Einkomponentige Polyurethanzusammensetzungen härten durch die Reaktion mit Feuchtigkeit, üblicherweise Luftfeuchtigkeit, aus, wobei die Aushärtung über eindiffundierendes Wasser von aussen nach innen im applizierten Klebstoff erfolgt. Die Aushärtungsgeschwindigkeit nimmt gegen innen ab, da das für die Aushärtung erforderliche Wasser durch die zunehmend dicker werdende, reaktiv vernetzte Polymerschicht ("Haut") hindurchdiffundieren muss. Wegen der relativ langsamen Aushärtung lassen sich mit herkömmlichen einkomponentigen Polyurethanklebstoffen oft keine guten Anfangsfestigkeiten erreichen. Trotzdem sind einkomponentige Klebstoffe bei Anwendern beliebt, weil sie keinen Mischungsschritt benötigen wie im Fall von zwei- oder mehrkomponentigen Zusammensetzungen.

Eine Möglichkeit, die Anfangsfestigkeit insbesondere von einkomponentigen Zusammensetzungen unabhängig von der Aushärtung zu verbessern ist die Zugabe von grösseren Mengen an verstärkenden Füllstoffen, wie beispielsweise Russ. Solche Füllstoffe verdicken den Klebstoff und ermöglichen gute Anfangsfestigkeiten auch im frisch applizierten Zustand. Durch den Einsatz von signifikanten Mengen an Russ steigt jedoch die Viskosität der Zusammensetzung übermässig an, und bei Russgehalten von über 20 Gewichts-% kann oftmals die Zusammensetzung überhaupt nicht mehr gepumpt werden, da sie bereits viel zu hochviskos ist, was für eine automatisierte Förderung und Applikation der Zusammensetzung in der industriellen Fertigung problematisch ist. Dies führt zudem dazu, dass sehr hohe Auspresskräfte nötig werden um den Klebstoff beispielsweise aus einer Kartusche applizieren. WO 2020/201419 A1, WO 2020/030608 A1, sowie WO 2020/201421 beispielsweise offenbaren einkomponentige Polyurethanklebstoffe, welche einen Russanteil von weniger als 20 Gewichts-% aufweisen.

Polyurethan-Klebstoffzusammensetzungen mit guter Anfangsfestigkeit sind ebenfalls erhältlich in Form sogenannter Warmschmelzklebstoffe (Warmmelts), welche bei Raumtemperatur eine pastöse bis nahezu feste Konsistenz haben und zur Applikation erwärmt werden, typischerweise auf eine Temperatur im Bereich von 40 °C bis 80 °C, und im warmen Zustand vergleichsweise flüssig sind. Die Anfangsfestigkeit eines solchen Klebstoffs wird nicht primär durch eine chemische Reaktion, sondern durch eine starke Viskositätserhöhung beim Abkühlen erhalten, welche durch das physikalische Erstarren eines Bestandteils des Klebstoffs, der sogenannten Schmelzkomponente, zustande kommt. Die Schmelzkomponente stellt dabei eine bei Raumtemperatur feste Substanz dar, welche beim Aufheizen des Klebstoffs auf die Applikationstemperatur schmilzt und flüssig wird und beim erneuten Abkühlen des Klebstoffs innerhalb einer gewissen Zeit wieder erstarrt, beispielsweise durch Kristallisation.

Solche Warmschmelzklebstoffe in Form von einkomponentigen Polyurethan-zusammensetzungen sind beispielsweise aus US 5,367,036 bekannt. Die dort beschriebene Zusammensetzung enthält neben einem Isocyanatgruppen aufweisenden Polyurethanpolymer eine Schmelzkomponente in Form eines nichtreaktiven Polyurethanpolymers, dessen Isocyanatgruppen mit einem Monoalkohol zu Urethanen umgesetzt wurden. Die Schmelzkomponente bewirkt eine temperaturabhängige Viskositätserhöhung und führt zu einer guten Anfangsfestigkeit. Die Verwendung eines nichtreaktiven Polyurethanpolymers als Schmelzkomponente weist aber den Nachteil auf, dass dieses bei der chemischen Aushärtung der Zusammensetzung mittels Feuchtigkeit nicht in die Polyurethan-Matrix eingebaut wird. Die Schmelzkomponente kann deshalb aus der ausgehärteten Zusammensetzung migrieren und so unerwünschte Effekte auf der Oberfläche des verklebten Substrats verursachen, oder zu geringerer chemischer Beständigkeit, niedrigerer mechanischer Festigkeit und/oder schlechteren Haftungseigenschaften der ausgehärteten Zusammensetzung führen.

Die WO 95/00572 A1 beschreibt warm applizierbare Klebstoffe, welche ein flüssiges reaktives Prepolymer und eine damit mindestens teilweise unverträgliche Schmelzkomponente enthalten, welche vorzugsweise ein Prepolymer mit Isocyanat-Endgruppen darstellt. US 5,166,302 und US 5,173,538 beschreiben warm, beziehungsweise heiss, applizierbare Klebstoffzusammensetzungen, die neben einem flüssigen Polyurethanpolymer eine reaktive Schmelzkomponente in Form eines Isocyanatgruppen aufweisenden Polyurethanpolymers enthalten. Die in diesen Patentschriften beschriebenen, Isocyanatgruppen aufweisenden Schmelzkomponenten werden bei der chemischen Aushärtung des Klebstoffs mittels Feuchtigkeit in die Polyurethan-Matrix eingebaut, was unerwünschte Effekte wie sie bei nichtreaktiven Schmelzkomponenten auftreten deutlich vermindert. Sie neigen aber dazu, im Klebstoff beim Abkühlen sehr schnell zu erstarren und dadurch zu einer geringen Offenzeit zu führen und/oder im ausgehärteten Klebstoff durch die reaktive Vernetzung in der Polymermatrix Spannungen zu verursachen, welche sich nachteilig auf die Festigkeit des Klebeverbundes auswirken können. Weitere Nachteile der beschriebenen reaktiven Schmelzkomponenten liegen darin, dass diese nur bedingt lagerstabil sind und über die Reaktivgruppen vorzeitig vernetzen können, was ihre Viskosität und ihr Erstarrungsverhalten negativ beeinflusst. Zusätzlich sind sie anfällig für kalte Umgebungstemperaturen bei der Anwendung, so etwa einer Fabrikhalle im Winter, da in solchen Fällen die erwärmte Zusammensetzung zu rasch abkühlt und zu schnell erstarrt.

WO 2018/132242 A1 beschreibt eine weiterentwickelte solche Klebstoffzusammensetzung, welche ein auf 4,4'-Diphenylmethandiisocyanat (MDI) und einem Polyesterpolyol basierendes Polyesterurethan-Polymer umfasst und bei Raumtemperatur appliziert werden kann und durch die so verbesserte Anfangsfestigkeit trotzdem eine verminderte Abrutschtendenz eines damit verklebten Substrates zeigt.

Reaktive Schmelzkomponenten basierend auf Polyesterurethanen wie eben beschrieben sind wegen ihrer vorteilhaften Eigenschaften aktuell die am meisten in solchen Polyurethanklebstoffen verwendeten Additive zur Verbesserung der Anfangsfestigkeit, oft in Kombination mit Russ.

Alle bekannten, ein solches Polyesterurethan-Polymer als Schmelzkomponente enthaltenden Polyurethanzusammensetzungen weisen jedoch noch immer inhärente Nachteile auf. Insbesondere führen die für eine ausreichende Anfangsfestigkeit und Abrutschstabilität in den beschriebenen Klebeanwendungen benötigten Mengen dieses Polyesterurethan-Polymers dazu, dass die Tendenz zur Delamination, also zum Verlust der Adhäsion unter Belastung der Verklebung, steigt. Die Menge der Schmelzkomponente kann zwar durch zusätzlichen Einsatz von verstärkenden Füllstoffen wie Russ minimiert werden, was dieses Problem lösen kann. Dadurch steigt aber unweigerlich die Viskosität und damit die benötigte Auspresskraft bei Applikation, was unerwünscht ist. Zudem müssen Verklebungen mit hohen Kräften verpresst werden, um einen genügenden Flächenkontakt des Klebstoffs mit den Substraten herzustellen.

Es ist bisher nicht zufriedenstellend gelungen, eine als elastischer struktureller Klebstoff in der Fertigungsindustrie geeignete einkomponentige Polyurethanzusammensetzung zur Verfügung zu stellen, welche mit niedriger Auspresskraft leicht appliziert oder gepumpt werden kann, gleichzeitig eine sehr gute Anfangsfestigkeit aufweist, die ein Abrutschen von frisch verklebten Substraten verhindert, und zudem stabile Verklebungen ohne Delamination unter mechanischer Belastung ermöglicht.

### Darstellung der Erfindung

Aufgabe der vorliegenden Erfindung ist es, einkomponentige feuchtigkeitshärtende Polyurethan-Zusammensetzungen mit guter Anfangsfestigkeit zur Verfügung zu stellen, welche bei Raumtemperatur oder erwärmt appliziert werden können, dabei genügend niedrigviskos für eine problemlose Applikation und Förderung mittels Pumpen ist, und deren Verklebung nicht zu Delamination unter mechanischem Stress zeigt. Weiterhin soll die Zusammensetzung sehr gute Adhäsion auf Substraten wie Automobillack, Glas und Siebdruckkeramik aufweisen, robuste mechanischen Eigenschaften auch nach Wärmelagerung zeigen und niedrige Kompressionskräfte bei der Verklebung von Substraten benötigen.

Diese Aufgabe wird mit einer feuchtigkeitshärtenden Zusammensetzung wie in Anspruch 1 beschrieben gelöst. Die Zusammensetzung enthält mindestens ein Isocyanatgruppen-haltiges Polyetherurethan-Polymer **P1** mit einem Gehalt an monomeren Diisocyanaten von höchstens 0.5 Gewichts-% erhalten aus der Umsetzung von mindestens einem monomeren Diisocyanat mit mindestens einem Polyetherpolyol mit einem mittleren Molekulargewicht Mₙ von mehr als 2500 g/mol in einem NCO/OH-Verhältnis von mindestens 3/1 und nachfolgender Entfernung eines Grossteils der monomeren Diisocyanate mittels eines geeigneten Trennverfahrens, sowie mehr als 20 Gewichts-% Russ, bezogen auf die gesamte Zusammensetzung. Zusätzlich enthält die Zusammensetzung ein bei Raumtemperatur festes Polyurethanpolymer **P2** und/oder ein lineares, kurzkettiges Polyetherurethan-Polymers **P3** in kleinen Mengen.

Die erfindungsgemässe Zusammensetzung ist bei Raumtemperatur mit vergleichsweise niedrigen Auspresskräften aussergewöhnlich gut verarbeitbar und verfügt über eine sehr gute Anfangsfestigkeit mit einer niedrigen Abrutschtendenz vor Aushärtung und einer sehr niedrigen Delaminationstendenz einer Verklebung nach Aushärtung der Zusammensetzung als Klebstoff.

Besonders überraschend ist der Umstand, dass die erfindungsgemässe Zusammensetzung unerwartet gute Verarbeitungseigenschaften aufweist, obwohl sie einen hohen Gehalt an Russ aufweist.

Zur Verbesserung von Anfangsfestigkeit, Standfestigkeit und Fadenzug enthalten feuchtigkeitshärtende Polyurethan-Klebstoffe insbesondere für den Fahrzeugbau oft zusätzlich eine Schmelzkomponente, typischerweise eine geringe Menge eines bei Raumtemperatur festen Polyurethanpolymers basierend auf einem kristallinen Polyesterpolyol. Durch die Schmelzkomponente wird aber die Auspresskraft des Klebstoffs bei Raumtemperatur und in der Kälte erhöht, und die Standfestigkeit ist stark scherabhängig, was zu Problemen bei der Herstellung und Applikation führen kann. Die erfindungsgemässe Zusammensetzung ist überraschenderweise auch dann unerwartet einfach auspressbar, wenn sie zusätzlich geringe Mengen eines bei Raumtemperatur festen Polyurethanpolymers **P2** enthält, wobei die rheologischen Eigenschaften wesentlich weniger scherabhängig sind. Insbesondere ermöglicht die erfindungsgemässe Zusammensetzung Klebstoffe, bei denen eine solche Schmelzkomponente in deutlich tieferer Menge als im Stand der Technik eingesetzt oder ganz weggelassen werden kann, ohne die Anfangsfestigkeit zu beeinträchtigen.

Die erfindungsgemässe Zusammensetzung ermöglicht bei Raumtemperatur oder im erwärmten Zustand applizierbare feuchtigkeitshärtende elastische Polyurethan- Klebstoffe mit verbesserten Applikationseigenschaften, insbesondere einer besonders guten Auspressbarkeit, aber gleichzeitig einer aussergewöhnlich hohen Anfangsfestigkeit, bei unverändert guten Eigenschaften in Bezug auf Lagerstabilität, Aushärtegeschwindigkeit, Blasenbildung, Festigkeit, Dehnbarkeit, Elastizität und Gefahrstoff-Einstufung im Vergleich zum Stand der Technik. Damit ist die Zusammensetzung besonders geeignet als elastischer Klebstoff im Fahrzeugbau, insbesondere für den Einsatz von elastisch verklebten Windschutzscheiben an Automobilen in Direktverglasungs-Anwendungen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine feuchtigkeitshärtende Polyurethan-Zusammensetzung enthaltend
- mindestens ein Isocyanatgruppen-haltiges Polyetherurethan-Polymer **P1** mit einem Gehalt an monomeren Diisocyanaten von höchstens 0.5 Gewichts-%, bevorzugt höchstens 0.3 Gewichts-%, besonders bevorzugt höchstens 0.2 Gewichts-%, bezogen auf das Polymer **P1,** erhalten aus der Umsetzung von mindestens einem monomeren Diisocyanat mit mindestens einem Polyetherpolyol mit einem mittleren Molekulargewicht Mₙ von mehr als 2500 g/mol, bevorzugt 2'750 bis 20'000 g/mol, besonders bevorzugt 3'000 bis 15'000 g/mol, insbesondere 4'000 bis 10'000 g/mol, in einem NCO/OH-Verhältnis von mindestens 3/1 und nachfolgender Entfernung eines Grossteils der monomeren Diisocyanate mittels eines geeigneten Trennverfahrens, und
- mehr als 20 Gewichts-% Russ, bevorzugt zwischen 20.5 und 25 Gewichts-% Russ, insbesondere zwischen 21 und 24 Gewichts-% Russ, bezogen auf die gesamte Zusammensetzung, und
- optional höchstens 2 Gewichts-%, bevorzugt zwischen 0.5 und 1.5 Gewichts-%, eines bei Raumtemperatur festen Polyurethan-Polymers **P2,** bezogen auf die gesamte Zusammensetzung, erhalten aus der Umsetzung von mindestens einem monomeren Diisocyanat mit mindestens einem mindestens teilkristallinen Polyester- oder Polycarbonatpolyol in einem NCO/OH-Verhältnis von mindestens 1.3/1, und
- optional bis zu 5 Gewichts-%, bevorzugt zwischen 0.5 und 2 Gewichts-%, eines Polyetherurethan-Polymers **P3,** bezogen auf die gesamte Zusammensetzung, erhalten aus der Umsetzung von mindestens einem monomeren Diisocyanat mit mindestens einem Polyetherdiol mit einem mittleren Molekulargewicht Mₙ von höchstens 2500 g/mol in einem NCO/OH-Verhältnis von mindestens 1.3/1,
mit der Massgabe, dass mindestens eines der Polymere **P2** und **P3** in der Zusammensetzung enthalten ist.

Als "monomeres Diisocyanat" wird eine organische Verbindung mit zwei Isocyanatgruppen, die durch einen zweiwertigen Kohlenwasserstoff-Rest mit 4 bis 15 C-Atomen voneinander getrennt sind, bezeichnet.

Als "Polyetherurethan-Polymer" wird ein Polymer bezeichnet, welches als Repetiereinheiten Ethergruppen aufweist und zusätzlich Urethangruppen enthält.

Als "Polyesterurethan-Polymer" wird ein Polymer bezeichnet, welches als Repetiereinheiten Estergruppen aufweist und zusätzlich Urethangruppen enthält.

Als "NCO-Gehalt" wird der Gehalt an Isocyanatgruppen in Gewichts-% bezogen auf das ganze Polymer bezeichnet.

Als "Molekulargewicht" wird die molare Masse (in Gramm pro Mol) eines Moleküls oder eines Molekül-Rests bezeichnet. Als "mittleres Molekulargewicht" wird das Zahlenmittel des Molekulargewichts (Mₙ) einer polydispersen Mischung von oligomeren oder polymeren Molekülen oder Molekül-Resten bezeichnet. Es wird mittels Gelpermeationschromatographie (GPC) gegen Polystyrol als Standard bestimmt.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "einkomponentig" wird eine Zusammensetzung bezeichnet, bei welcher alle Bestandteile der Zusammensetzung im gleichen Gebinde vorliegen und welche als solche lagerstabil ist.

Als "Raumtemperatur" wird eine Temperatur von 23°C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%) bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Die feuchtigkeitshärtende Zusammensetzung enthält mindestens ein Isocyanatgruppen-haltiges Polyetherurethan-Polymer **P1** mit einem Gehalt an monomeren Diisocyanaten von höchstens 0.5 Gewichts-% erhalten aus der Umsetzung von mindestens einem monomeren Diisocyanat mit mindestens einem Polyetherpolyol mit einem mittleren Molekulargewicht Mₙ von mehr als 2'500 g/mol in einem NCO/OH-Verhältnis von mindestens 3/1 und nachfolgender Entfernung eines Grossteils der monomeren Diisocyanate mittels eines geeigneten Trennverfahrens.

Bevorzugt ist es mindestens ein Polyetherurethan-Polymer **P1** mit einem Gehalt von mindestens 80 Gewichts-% 1,2-Propylenoxy-Einheiten im Polyether-Segment.

Bevorzugt enthält das Polyetherurethan-Polymer **P1** 80 bis 100 Gewichts-% 1,2-Propylenoxy-Einheiten und 0 bis 20 Gewichts-% 1,2-Ethylenoxy-Einheiten im Polyether-Segment.

Bevorzugt hat das Polyetherurethan-Polymer **P1** eine mittlere NCO-Funktionalität im Bereich von 1.5 bis 3.5, bevorzugt 1.8 bis 3.2.

Bevorzugt hat das Polyetherurethan-Polymer **P1** einen NCO-Gehalt im Bereich von 1 bis 5 Gewichts-%, insbesondere 1 bis 3 Gewichts-%.

Bevorzugt hat das Polyetherurethan-Polymer **P1** ein mittleres Molekulargewicht Mₙ im Bereich von 3'000 bis 20'000 g/mol, bevorzugt 4'500 bis 15'000 g/mol.

Bevorzugt hat das Polyetherurethan-Polymer **P1** eine Viskosität bei 20°C im Bereich von 5 bis 300 Pa·s, besonders bevorzugt 5 bis 200 Pa·s, insbesondere 5 bis 100 Pa·s. Dabei wird die Viskosität bestimmt mit einem Kegel-Platten-Viskosimeter mit einem Kegeldurchmesser 25 mm, Kegelwinkel 1°, Kegelspitze-Platten-Abstand 0.5 mm bei einer Scherrate von 50 s⁻¹.

Die bevorzugten Polyetherurethan-Polymere **P1** ermöglichen gut verarbeitbare feuchtigkeitshärtende Zusammensetzungen mit hoher Elastizität und Dehnbarkeit bei hoher Festigkeit.

Das Isocyanatgruppen-haltige Polyetherurethan-Polymer **P1** wird erhalten aus der Umsetzung von mindestens einem monomeren Disocyanat und mindestens einem geeigneten Polyetherpolyol mit einem mittleren Molekulargewicht Mₙ von mehr als 2'500 g/mol. Bevorzugte Formen des Polyetherpolyols werden weiter unten beschrieben.

Die Umsetzung wird bevorzugt unter Feuchtigkeitsausschluss bei einer Temperatur im Bereich von 20 bis 160°C, insbesondere 40 bis 140°C, durchgeführt, gegebenenfalls in Anwesenheit geeigneter Katalysatoren.

Das NCO/OH-Verhältnis liegt bei mindestens 3/1, bevorzugt im Bereich von 3/1 bis 10/1. Das nach der Umsetzung der OH-Gruppen im Reaktionsgemisch verbleibende monomere Diisocyanat wird entfernt, insbesondere mittels Destillation.

Das NCO/OH-Verhältnis bei der Umsetzung liegt bevorzugt im Bereich von 3/1 bis 10/1, insbesondere 4/1 bis 7/1, und das erhaltene Isocyanatgruppen-haltige Polyetherurethan-Polymer enthält nach der Destillation höchstens 0.5 Gewichts-%, bevorzugt höchstens 0.3 Gewichts-%, besonders bevorzugt höchstens 0.2 Gewichts-% monomeres Diisocyanat, bezogen auf den Destillationsrückstand enthaltend das Polyetherurethan-Polymer.

Polyetherurethan-Polymere, welche nicht mit dem oben beschriebenen Verfahren und mit einem niedrigeren NCO/OH-Verhältnis hergestellt werden, also beispielsweise 2/1, sind nicht als Polymer **P1** geeignet, da sie überraschenderweise nicht in der Lage sind, die erfindungsgemässen Eigenschaften der Zusammensetzung hervorzubringen. Es sei in diesem Zusammenhang angemerkt, dass das NCO/OH Verhältnis bei der Herstellung der Polyurethan-Polymere einen grossen Einfluss auf die Kettenlänge und die Polydispersität der resultierenden Polyurethan-Polymere hat.

Als monomeres Diisocyanat für die Herstellung des Polyetherurethan-Polymers **P1** geeignet sind handelsübliche aromatische, aliphatische oder cycloaliphatische Diisocyanate, insbesondere 4,4'-Diphenylmethandiisocyanat, gegebenenfalls mit Anteilen von 2,4'- und/oder 2,2'-Diphenylmethandiisocyanat (MDI), 2,4-Toluylendiisocyanat oder Gemische davon mit 2,6-Toluylendiisocyanat (TDI), 1,4-Phenylendiisocyanat (PDI), Naphthalin-1,5-diisocyanat (NDI), 1,6-Hexandiisocyanat (HDI), 2,2(4),4-Trimethyl-1,6-hexamethylendiisocyanat (TMDI), Cyclohexan-1,3- oder -1,4-diisocyanat, 1-Isocyanato-3,3,5-trimethyl-5-isocyanatomethylcyclohexan (Isophorondiisocyanat oder IPDI), Perhydro-2,4'- oder - 4,4'-diphenylmethandiisocyanat (HMDI), 1,3- oder 1,4-Bis(isocyanatomethyl)-cyclohexan, m- oder p-Xylylendiisocyanat (XDI), oder Gemische davon. Davon bevorzuzgt ist MDI, TDI, HDI oder IPDI. Besonders bevorzugt ist IPDI oder MDI.

Am meisten bevorzugt ist MDI, insbesondere 4,4'-Diphenylmethandiisocyanat (4,4'-MDI). Dabei ist das 4,4'-MDI insbesondere von einer Qualität, welche nur geringe Anteile an 2,4'- und/oder 2,2'-Diphenylmethandiisocyanat enthält und bei Raumtemperatur fest ist.

Die Isocyanatgruppen des Polyetherurethan-Polymers **P1** sind somit bevorzugt abgeleitet von 4,4'-Diphenylmethandiisocyanat. Ein solches Polymer härtet besonders schnell aus und ermöglicht besonders hohe Festigkeiten.

Als Polyetherpolyol für die Herstellung des Polyetherurethan-Polymers **P1** geeignet sind Polyetherpolyole, insbesondere mit mindestens 80 Gewichts-% 1,2-Propylenoxy-Einheiten im Polyether-Segment, insbesondere Polyoxypropylen-Diole oder Polyoxypropylen-Triole, oder sogenannte Ethylenoxid-terminierte (EO-capped bzw. EO-tipped) Polyoxypropylen-Diole oder -Triole. Letztere sind Polyoxyethylenpolyoxypropylen-Mischpolyole, die insbesondere dadurch erhalten werden, dass Polyoxypropylen-Diole oder -Triole nach Abschluss der Propoxylierungsreaktion mit Ethylenoxid weiter alkoxyliert werden und dadurch primäre Hydroxylgruppen aufweisen.

Bevorzugt sind Polyetherpolyole mit einer OH-Zahl im Bereich von 6 bis 280 mg KOH/g, insbesondere 7.5 bis 112 mg KOH/g.

Bevorzugt sind Polyetherpolyole mit einem mittleren Molekulargewicht Mₙ im Bereich von 2'750 bis 20'000 g/mol, bevorzugt 3'000 bis 15'000 g/mol, insbesondere 4'000 bis 10'000 g/mol.

Bevorzugt sind Polyetherpolyole mit einer mittleren OH-Funktionalität im Bereich von 1.6 bis 3.

Bei der Herstellung des Isocyanatgruppen-haltigen Polyetherurethan-Polymers **P1** können auch Anteile von zwei- oder mehrfunktionellen Alkoholen mitverwendet werden.

Besonders bevorzugt wird das Polyetherurethan-Polymer **P1** erhalten aus der Umsetzung von mindestens einem monomeren Diisocyanat und mindestens einem gegebenenfalls Ethylenoxid-terminierten Polyoxypropylen-Diol oder -Triol mit einer OH-Zahl im Bereich von 7.5 bis 112 mg KOH/g, insbesondere 11 bis 58 mg KOH/g.

Als Trennverfahren für die Entfernung von monomerem Diisocyanat bevorzugt ist ein destillatives Verfahren, insbesondere Dünnschichtdestillation oder Kurzwegdestillation, bevorzugt unter Anlegen von Vakuum.

Besonders bevorzugt ist ein mehrstufiges Verfahren, bei welchem das monomere Diisocyanat in einem Kurzwegverdampfer bei einer Manteltemperatur im Bereich von 120 bis 200°C und einem Druck von 0.001 bis 0.5 mbar entfernt wird.

Im Fall des als monomeres Diisocyanat bevorzugten 4,4'-MDI ist das destillative Entfernen besonders anspruchsvoll. Es muss beispielsweise darauf geachtet werden, dass das Kondensat nicht fest wird und die Anlage verstopft. Bevorzugt wird bei einer Manteltemperatur im Bereich von 160 bis 200°C bei 0.001 bis 0.5 mbar gefahren und das entfernte Monomer bei einer Temperatur im Bereich von 40 bis 60°C kondensiert.

Bevorzugt erfolgt die Umsetzung des monomeren Diisocyanats mit dem Polyetherpolyol und das anschliessende Entfernen des Grossteils des im Reaktionsgemisch verbliebenen monomeren Diisocyanats ohne den Einsatz von Lösemitteln bzw. Schleppmitteln.

Bevorzugt wird das nach der Umsetzung entfernte monomere Diisocyanat anschliessend wiederverwendet, d.h. erneut für die Herstellung von Isocyanatgruppen-haltigem Polymer eingesetzt.

Bevorzugt umfasst das Polymer **P1** mindestens ein Polymer **P1a,** erhalten aus einem Polyetherdiol, und mindestens ein Polymer **P1b,** erhalten aus einem Polyethertriol. Ein solches Polymer **P1a** ist linear und ermöglicht gute Dehnbarkeit. In Kombination mit einem solchen Polymer **P1b** wird zusätzlich noch eine besonders gute Festigkeit erhalten.

Besonders bevorzugt umfasst das Polyetherurethan-Polymer **P1** ein Polymer **P1a** mit einem NCO-Gehalt im Bereich von 1 bis 2.5 Gewichts-%, insbesondere 1.3 bis 2.1 Gewichts-%, und einem Gehalt an monomeren Diisocyanaten von höchstens 0.3 Gewichts-%, erhalten aus der Umsetzung von mindestens einem monomeren Diisocyanat mit einem Polyether-Diol mit einer OH-Zahl im Bereich von 13 bis 38 mg KOH/g, insbesondere 22 bis 32 mg KOH/g, in einem NCO/OH-Verhältnis von mindestens 3/1 und nachfolgender Entfernung eines Grossteils der monomeren Diisocyanate mittels eines geeigneten Trennverfahrens. Bevorzugt als monomeres Diisocyanat ist IPDI oder 4,4'-MDI, insbesondere 4,4'-MDI.

Weiterhin besonders bevorzugt umfasst das Polyetherurethan-Polymer **P1** ein Polymer **P1b** mit einem NCO-Gehalt im Bereich von 1 bis 2.5 Gewichts-%, insbesondere 1.3 bis 2.1 Gewichts-%, und einem Gehalt an monomeren Diisocyanaten von höchstens 0.3 Gewichts-%, welches erhalten wird aus der Umsetzung von mindestens einem monomerem Diisocyanat und einem Polyether-Triol mit einer mittleren OH-Funktionalität im Bereich von 2.2 bis 3 und einer OH-Zahl im Bereich von 20 bis 42 mg KOH/g in einem NCO/OH-Verhältnis von mindestens 3/1 und nachfolgender Entfernung eines Grossteils der monomeren Diisocyanate mittels eines geeigneten Trennverfahrens. Bevorzugt als monomeres Diisocyanat ist IPDI oder 4,4'-MDI, insbesondere 4,4'-MDI.

Weiterhin besonders bevorzugt als Polyetherurethan-Polymer **P1** ist eine Mischung dieser beiden besonders bevorzugten Polyetherurethan-Polymere **P1a** und **P1b** wie eben beschrieben.

Die feuchtigkeitshärtende Zusammensetzung enthält bevorzugt 20 bis 60 Gewichts-%, insbesondere 25 bis 50 Gewichts-%, Polyetherurethan-Polymer P1.

Im Fall einer Mischung aus Polymer **P1a** und Polymer **P1b** im Polyetherurethan-Polymer **P1** liegt bevorzugt ein Gewichtsverhältnis von **P1a** : **P1b** von 5:1 bis 1:5, bevorzugt 4:1 bis 1:2, besonders bevorzugt 4:1 bis 1:1 vor.

Die feuchtigkeitshärtende Zusammensetzung enthält weiterhin optional höchstens 2 Gewichts-% eines bei Raumtemperatur festen Polyesterurethan-Polymers **P2,** bezogen auf die gesamte Zusammensetzung, erhalten aus der Umsetzung von mindestens einem monomeren Diisocyanat mit mindestens einem mindestens teilkristallinen Polyester- oder Polycarbonatpolyol in einem NCO/OH-Verhältnis von mindestens 1.3/1.

Eine solches Polymer **P2** ist einerseits geeignet für Klebstoffe, welche im erwärmten Zustand, beispielsweise mit einer Temperatur von etwa 60 °C, appliziert werden und nach der Applikation sehr schnell eine hohe Anfangsfestigkeit aufweisen, so dass die verklebten Teile selbsttragend sind und nicht fixiert werden müssen. Dabei liegt Polymer **P2** im erwärmten Klebstoff bei der Applikation geschmolzen vor und kristallisiert beim Abkühlen des applizierten Klebstoffs aus. Weiterhin ist ein solches Polymer **P2** geeignet für Klebstoffe, welche bei Umgebungstemperatur appliziert werden, wobei die Schmelzkomponente in auskristallisierter Form vorliegt und eine erhöhte Standfestigkeit bewirkt. Diese Schmelzkomponente in Form des enthaltenen Polymers **P2** ist aber aufwendig in der Handhabung und die damit erreichte Standfestigkeit ist stark scherabhängig, was zu Problemen bei der Herstellung und Applikation führen kann. Zudem erschweren höhere Mengen an Polymer **P2** die Auspressbarkeit des Klebstoffs bei Raumtemperatur und bei kalten Umgebungs- oder Klebstofftemperaturen.

Weiterhin sollen nicht mehr als maximal 2 Gewichts-% Polymer **P2** in der Zusammensetzung eingesetzt werden. Ein Gehalt an Polymer **P2** von mehr als 2 Gewichts-%, bezogen auf die gesamte Zusammensetzung, führt einerseits zu einem erhöhten Risiko einer Delamination eines verklebten Substrats unter Belastung, also einem Adhäsionsverlust. Weiterhin führt es zu einer unerwünschten Erhöhung der benötigten Kompressionskraft bei der Verklebung, wenn das Material abkühlt. Zudem führt es zu einer drastischen Verkürzung der Offenzeit bei Abkühlung.

Die vorliegende Erfindung ermöglicht es, insbesondere mit Einsatz von Polymer **P3** wie weiter unten beschrieben, Klebstoffe mit ausgezeichneter minimaler Abrutschtendenz und maximaler Anfangsfestigkeit bereitzustellen, welche mit höchstens 2 Gewichts-% an Polymer **P2** oder anderen Schmelzkomponenten formuliert werden können und daher diese Nachteile nicht aufweisen.

Eine bevorzugte Ausführungsform der erfindungsgemässen Zusammensetzung enthält zwischen 0.5 und 1.5 Gewichts-% Polymer **P2,** bezogen auf die gesamte Zusammensetzung. Mit dieser Menge an Polymer **P2** können die vorteilhaften Eigenschaften von solchen bei Raumtemperatur festen Polymeren genutzt werden, ohne dass die oben erwähnten Nachteile in signifikantem Masse auftreten.

Eine weitere bevorzugte Ausführungsform der erfindungsgemässen Zusammensetzung enthält kein Polymer **P2** und lediglich Polymer P3. Eine solche Zusammensetzung ist besonders gut für kalte Umgebungstemperaturen bei der Anwendung geeignet und zeigt eine besonders niedrige Delaminationstendenz der Verklebung. Trotzdem weist sie eine genügend hohe Anfangsfestigkeit und genügend niedrige Abrutschtendenz bei der Anwendung auf.

Das mindestens eine Polyurethan-Polymer **P2** ist erhältlich durch die Umsetzung von mindestens einem mindestens teilkristallinen Polyester- oder Polycarbonatpolyol in einem NCO/OH-Verhältnis von mindestens 1.3/1 mit mindestens einem monomeren Diisocyanat nach bekannten Verfahren.

Das für die Umsetzung verwendete monomere Diisocyanat ist bevorzugt 4,4'-Diphenylmethandiisocyanat (4,4'-MDI), 2,4'-Diphenylmethandiisocyanat (2,4'-MDI), 2,4-Toluylendiisocyanat oder Gemische davon mit 2,6-Toluylendiisocyanat (TDI), 1-Isocyanato-3,3,5-trimethyl-5-isocyanatomethylcyclohexan (IPDI) oder 1,6-Hexandiisocyanat (HDI). Diese Diisocyanate sind einfach erhältlich, preisgünstig und ermöglichen gute mechanische Festigkeiten. Es kann auch eine Kombination aus zwei oder mehr dieser monomeren Diisocyanate verwendet werden.

Besonders bevorzugt als monomeres Diisocyanat ist IPDI. Ein solches Polymer **P2** ist besonders geeignet in feuchtigkeitshärtenden Zusammensetzungen mit besonders hoher Lichtstabilität.

Am meisten bevorzugt als monomeres Diisocyanat ist 4,4'-MDI. Dabei ist das 4,4'-MDI insbesondere von einer Qualität, welche nur geringe Anteile an 2,4'- und/oder 2,2'-Diphenylmethandiisocyanat enthält und bei Raumtemperatur fest ist. Ein solches Polymer **P2** ermöglicht eine besonders schnelle Aushärtung und hohe Festigkeiten.

Die Umsetzung von mindestens einem monomeren Diisocyanat und dem mindestens teilkristallinen Polyester- oder Polycarbonatpolyol zur Herstellung des Polymers **P2** wird bevorzugt unter Feuchtigkeitsausschluss bei einer Temperatur im Bereich von 20 bis 160°C, insbesondere 40 bis 140°C, durchgeführt, gegebenenfalls in Anwesenheit geeigneter Katalysatoren.

Das NCO/OH-Verhältnis liegt bevorzugt im Bereich von 1.3/1 bis 10/1. Das nach der Umsetzung der OH-Gruppen im Reaktionsgemisch verbleibende monomere Diisocyanat kann entfernt werden, insbesondere mittels Destillation. Für den Fall, dass überschüssiges monomeres Diisocyanat mittels Destillation entfernt wird, liegt das NCO/OH-Verhältnis bei der Umsetzung bevorzugt im Bereich von 3/1 bis 10/1, insbesondere 4/1 bis 7/1, und das erhaltene Isocyanatgruppen-haltige Polymer enthält nach der Destillation bevorzugt höchstens 0.5 Gewichts-%, besonders bevorzugt höchstens 0.3 Gewichts-%, monomeres Diisocyanat.

Für den Fall, dass kein überschüssiges monomeres Diisocyanat aus dem Polymer entfernt wird, liegt das NCO/OH-Verhältnis bei der Umsetzung bevorzugt im Bereich von 1.3/1 bis 2.5/1. Ein Polymer enthält insbesondere höchstens 3 Gewichts-%, bevorzugt höchstens 2 Gewichts-%, monomeres Diisocyanat.

Als Polyole zur Herstellung eines Polyurethanpolymers **P2** besonders geeignet sind einerseits Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Pimelinsäure, Korksäure, Azelainsäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;

Bevorzugt sind bei Raumtemperatur flüssige, amorphe, teilkristalline und kristalline Polyesterdi- und -triole, insbesondere Polyesterdiole. Geeignete bei Raumtemperatur flüssige Polyesterdiole sind nicht weit unterhalb von Raumtemperatur fest, beispielsweise bei Temperaturen zwischen 0 °C und 25 °C und werden, wie amorphe Polyesterpolyole, stets in Kombination mit mindestens einem teilkristallinen oder kristallinen Polyesterpolyol eingesetzt. Als Polyesterdiole besonders bevorzugt sind Adipinsäure/Hexandiol-Polyester, Azelainsäure/Hexandiol-Polyester und Dodecandicarbon-säure/Hexandiol-Polyester mit einem Schmelzpunkt im Bereich von 40 °C bis 80 °C, insbesondere 50 °C bis 70 °C.

Als Polyole zur Herstellung eines Polyurethan Polymers **P2** besonders geeignet sind andererseits Polycarbonatpolyole, wie sie durch Umsetzung beispielsweise der oben genannten - zum Aufbau der Polyesterpolyole eingesetzten - Alkohole mit Dialkylcarbonaten, wie Dimethylcarbonat, Diarylcarbonaten, wie Diphenylcarbonat, oder Phosgen zugänglich sind. Insbesondere geeignet sind bei Raumtemperatur flüssige, amorphe, teilkristalline oder kristalline Polycarbonatdiole. Geeignete bei Raumtemperatur flüssige Polycarbonatdiole sind nicht weit unterhalb von Raumtemperatur fest, beispielsweise bei Temperaturen zwischen 0 °C und 25 °C und werden, wie amorphe Polycarbonatpolyole, stets in Kombination mit mindestens einem teilkristallinen oder kristallinen Polycarbonatpolyol eingesetzt.

Bevorzugt sind Polyesterdiole und Polycarbonatdiole.

Als Polyester-Diol geeignet sind insbesondere OH-funktionelle Polyester von Adipinsäure oder Sebacinsäure oder Dodecandicarbonsäure mit 1,4-Butandiol oder 1,6-Hexandiol.

Als Polycarbonat-Diol geeignet sind insbesondere OH-funktionelle Polycarbonate von 1,6-Hexandiol.

Ein solches Polymer **P2** ist typischerweise bei Raumtemperatur fest und hat zumindest partiell kristallinen Charakter.

Das Polyurethan-Polymer **P2** ist bei Raumtemperatur fest und weist bevorzugt einem Schmelzpunkt im Bereich von 40 °C bis 80 °C, insbesondere im Bereich von 50 °C bis 70 °C, auf.

Das Polyurethan-Polymer **P2** weist ein mittleres Molekulargewicht Mₙ von vorzugsweise 500 g/mol oder darüber auf. Insbesondere weist das Polyurethan-Polymer **P2** ein mittleres Molekulargewicht Mₙ von 1'000 bis 30'000 g/mol, bevorzugt von 2'000 bis 10'000 g/mol, auf. Weiterhin weist das Polyurethan-Polymer **P2** bevorzugt eine mittlere Funktionalität im Bereich von 1.8 bis 2.2 auf.

Die feuchtigkeitshärtende Zusammensetzung enthält weiterhin optional bis zu 5 Gewichts-% eines Polyetherurethan-Polymers **P3,** bezogen auf die gesamte Zusammensetzung, erhalten aus der Umsetzung von mindestens einem monomeren Diisocyanat mit mindestens einem Polyetherdiol mit einem mittleren Molekulargewicht Mₙ von höchstens 2'500 g/mol in einem NCO/OH-Verhältnis von mindestens 1.3/1.

Der Einsatz von Polymer **P3** ist optional, aber bevorzugt, da Polymer **P3** zu einer Verbesserung der erfindungsgemässen Eigenschaften führt, wie zum Beispiel zu einer noch niedrigeren Abrutschtendenz und einer noch höheren Anfangsfestigkeit. Insbesondere kann Polymer **P3** die Vorteile von Polymer **P2** mit sich bringen, ohne dessen Nachteile. Eine Kombination von Polymer **P3** und kleinen Mengen Polymer **P2** kann zu besonders guten Eigenschaften bezüglich Abrutschverhalten und Anfangsfestigkeit führen.

Bevorzugt enthält die Zusammensetzung zwischen 0.5 und 2 Gewichts-% Polymer **P3,** bezogen auf die gesamte Zusammensetzung. Mehr als 2 Gewichts-% Polymer **P3** haben nicht direkt negative Auswirkungen, sie führen aber zu keiner weiteren signifikanten Verbesserung der Eigenschaften.

Polymer **P3** wird aus mindestens einem Polyetherdiol mit einem mittleren Molekulargewicht Mₙ von höchstens 2'500 g/mol in einem NCO/OH-Verhältnis von mindestens 1.3/1 hergestellt.

Geeignet sind alle Polyetherdiole, die diese Eigenschaften aufweisen.

Bevorzugt sind Polyoxypropylendiole mit einer OH-Zahl von 50 bis 300 mg KOH/g.

Beispielsweise geeignet ist Acclaim^{®} 2200 N (Covestro) mit einer OH-Zahl von 54 bis 58 mg KOH/g und einem mittleren Molekulargewicht Mₙ von etwa 2'000 g/mol.

Ebenfalls geeignet und bevorzugt ist Voranol^{®} P 400 (Dow) mit einer OH-Zahl von 260 mg KOH/g und einem mittleren Molekulargewicht Mₙ von etwa 431 g/mol. Mit Polymeren **P3** basierend auf diesem Diol können besonders niedriges Abrutschverhalten (Slip Down) und besonders niedrige Druckkräfte (Compression Force) bei der Anwendung der Zusammensetzung als Klebstoff erreicht werden.

Die am meisten bevorzugten Polyetherdiole für Polymer **P3** sind Poly(oxy-1,4-butylen)diole.

Ein Poly(oxy-1,4-butylen)diol ist ein Polyetherdiol mit 1,4-Butylenoxy-Einheiten. Ein solches Diol wird auch als Polytetramethylenetherglykol (PTMEG oder PTMG) bezeichnet. Mit Polymeren **P3** basierend auf diesem Diol können besonders niedrige Auspresskräfte und damit eine besonders gute Pump- und Applizierbarkeit bei Anwendung der Zusammensetzung als Klebstoff erreicht werden.

Besonders bevorzugt ist das mindestens eine Polyol ein Poly(oxy-1,4-butylen)diol oder ein Gemisch von Poly(oxy-1,4-butylen)diolen.

Besonders bevorzugt wird das isocyanatfunktionelle Polymer durch die Reaktion von Isophorondiisocyanat mit einem Poly(oxy-1,4-butylen)diol oder einem Gemisch von Poly(oxy-1,4-butylen)diolen, gegebenenfalls in Kombination mit mindestens einem Kettenverlängerer, erhalten.

Vorzugsweise hat das Poly(oxy-1,4-butylen)diol oder ein Gemisch von Poly(oxy-1,4-butylen)diolen eine durchschnittliche Gesamt-OH-Zahl im Bereich von 80 bis 200 mg KOH/g, vorzugsweise 100 bis 180 mg KOH/g.

Wird ein Gemisch aus zwei oder mehr Poly(oxy-1,4-butylen)-Diolen verwendet, ist die durchschnittliche Gesamt-OH-Zahl der Durchschnitt der OH-Zahlen der Diole im Gemisch.

Das Poly(oxy-1,4-butylen)diol wird vorzugsweise ausgewählt aus der Gruppe bestehend aus
- einem Poly(oxy-1,4-butylen)diol mit einer OH-Zahl im Bereich von 170 bis 180 mg KOH/g und einem mittleren Molekulargewicht Mₙ von etwa 650 g/mol,
- ein Poly(oxy-1,4-butylen)diol mit einer OH-Zahl im Bereich von 108 bis 118 mg KOH/g und einem mittleren Molekulargewicht Mₙ von etwa 1'000 g/mol,
- ein Poly(oxy-1,4-butylen)diol mit einer OH-Zahl im Bereich von 75 bis 85 mg KOH/g und einem mittleren Molekulargewicht Mₙ von etwa 1'400 g/mol,
- ein Poly(oxy-1,4-butylen)diol mit einer OH-Zahl im Bereich von 60 bis 65 mg KOH/g und einem mittleren Molekulargewicht Mₙ von etwa 1'800 g/mol,
- ein Poly(oxy-1,4-butylen)diol mit einer OH-Zahl im Bereich von 50 bis 60 mg KOH/g und einem mittleren Molekulargewicht Mₙ von etwa 2'000 g/mol,
- und Mischungen davon.

Solche Diole sind im Handel erhältlich, z.B. als Terathane^{®} 650, Terathane^{®} 1000, Terathane^{®} 1400, Terathane^{®} 1800 oder Terathane^{®} 2000 (alle von Invista), oder als PolyTHF 650, PolyTHF 1000, PolyTHF 1400, PolyTHF 1800 oder PolyTHF 2000 (alle von BASF).

Als monomere Diisocyanate für Polymer **P3** geeignet sind die bereits genannten handelsüblichen aromatischen, aliphatischen oder cycloaliphatischen Diisocyanate.

Das für die Umsetzung verwendete monomere Diisocyanat ist bevorzugt 4,4'-Diphenylmethandiisocyanat (4,4'-MDI), 2,4'-Diphenylmethandiisocyanat (2,4'-MDI), 2,4-Toluylendiisocyanat oder Gemische davon mit 2,6-Toluylendiisocyanat (TDI), 1-Isocyanato-3,3,5-trimethyl-5-isocyanatomethylcyclohexan (IPDI) oder 1,6-Hexandiisocyanat (HDI). Diese Diisocyanate sind einfach erhältlich, preisgünstig und ermöglichen gute mechanische Festigkeiten. Es kann auch eine Kombination aus zwei oder mehr dieser monomeren Diisocyanate verwendet werden.

Besonders bevorzugt als monomeres Diisocyanat ist IPDI. Ein solches Polymer **P3** ist besonders geeignet in feuchtigkeitshärtenden Zusammensetzungen mit besonders hoher Lichtstabilität.

Am meisten bevorzugt als monomeres Diisocyanat für Polymer **P3** ist 4,4'-MDI. Dabei ist das 4,4'-MDI insbesondere von einer Qualität, welche nur geringe Anteile an 2,4'- und/oder 2,2'-Diphenylmethandiisocyanat enthält und bei Raumtemperatur fest ist. Ein solches Polymer **P3** ermöglicht eine besonders schnelle Aushärtung und hohe Festigkeiten.

Die Umsetzung von mindestens einem monomeren Diisocyanat und dem Polyetherdiol zur Herstellung des Polymers **P3** wird bevorzugt unter Feuchtigkeitsausschluss bei einer Temperatur im Bereich von 20 bis 160°C, insbesondere 40 bis 140°C, durchgeführt, gegebenenfalls in Anwesenheit geeigneter Katalysatoren.

Das NCO/OH-Verhältnis liegt bevorzugt im Bereich von 1.3/1 bis 10/1. Das nach der Umsetzung der OH-Gruppen im Reaktionsgemisch verbleibende monomere Diisocyanat kann entfernt werden, insbesondere mittels Destillation. Für den Fall, dass überschüssiges monomeres Diisocyanat mittels Destillation entfernt wird, liegt das NCO/OH-Verhältnis bei der Umsetzung bevorzugt im Bereich von 3/1 bis 10/1, insbesondere 4/1 bis 7/1, und das erhaltene Isocyanatgruppen-haltige Polymer **P3** enthält nach der Destillation bevorzugt höchstens 0.5 Gewichts-%, besonders bevorzugt höchstens 0.3 Gewichts-%, monomeres Diisocyanat.

Für den Fall, dass kein überschüssiges monomeres Diisocyanat aus dem Polymer entfernt wird, liegt das NCO/OH-Verhältnis bei der Umsetzung bevorzugt im Bereich von 1.3/1 bis 2.5/1. Ein Polymer enthält insbesondere höchstens 3 Gewichts-%, bevorzugt höchstens 2 Gewichts-%, monomeres Diisocyanat.

Das Polymer **P3** hat bevorzugt eine Viskosität bei 20°C von höchstens 1'000 Pa·s, insbesondere höchstens 500 Pa·s. Bevorzugt liegt die Viskosität bei 20°C im Bereich von 10 bis 1'000 Pa·s, insbesondere 10 bis 500 Pa·s. Dabei wird die Viskosität bestimmt mit einem Kegel-Platten-Viskosimeter mit einem Kegeldurchmesser 25 mm, Kegelwinkel 1°, Kegelspitze-Platten-Abstand 0.5 mm bei einer Scherrate von 50 s⁻¹.

Bevorzugt weist das Polymer **P3** einen NCO-Gehalt im Bereich von 3 bis 12 Gewichts-%, mehr bevorzugt 3.5 bis 10 Gewichts-%, besonders bevorzugt 4 bis 9.5 Gewichts-%, insbesondere 4.5 bis 9 Gewichts-%, auf.

Bevorzugt weist das Polymer **P3** einen Gehalt an monomeren Diisocyanaten von höchstens 0.5 Gewichts-% auf und wird erhalten aus der Umsetzung von mindestens einem monomeren Diisocyanat und dem Polyetherdiol in einem NCO/OH-Verhältnis von mindestens 3/1 und nachfolgender Entfernung eines Grossteils des monomeren Diisocyanats mittels eines geeigneten Trennverfahrens.

Ein solches Polymer **P3** ist besonders niedrigviskos, was seine Handhabung erleichtert, und es ist besonders geeignet für die Verwendung in Zusammensetzungen mit weniger als 0.1 Gewichts-% monomeren Diisocyanaten; diese sind auch ohne besondere Schutzvorkehrungen sicher in der Handhabung und können in vielen Ländern ohne Gefahrstoff-Einstufung verkauft werden.

Bevorzugt liegt das NCO/OH-Verhältnis bei der Umsetzung im Bereich von 3/1 bis 10/1, besonders bevorzugt 3/1 bis 8/1, insbesondere 4/1 bis 7/1. Bevorzugt liegt der Gehalt an monomeren Diiocyanaten höchstens bei 0.3 Gewichts-%, insbesondere höchstens bei 0.2 Gewichts-%.

Als Trennverfahren für die Entfernung von monomerem Diisocyanat bevorzugt ist ein destillatives Verfahren, insbesondere Dünnschichtdestillation oder Kurzwegdestillation, bevorzugt unter Anlegen von Vakuum.

Besonders bevorzugt ist ein mehrstufiges Verfahren, bei welchem das monomere Diisocyanat in einem Kurzwegverdampfer bei einer Manteltemperatur im Bereich von 120 bis 200°C und einem Druck von 0.001 bis 0.5 mbar entfernt wird.

Bevorzugt erfolgt die Umsetzung des monomeren Diisocyanats mit dem hydrophoben Diol und das anschliessende Entfernen des Grossteils des im Reaktionsgemisch verbliebenen monomeren Diisocyanats ohne den Einsatz von Lösemitteln bzw. Schleppmitteln.

Bevorzugt wird das nach der Umsetzung entfernte monomere Diisocyanat anschliessend wiederverwendet, d.h. erneut für die Herstellung von Isocyanatgruppen-haltigem Polymer eingesetzt.

Das Polyetherurethan-Polymer **P1** und das gegebenenfalls enthaltene Polyurethan-Polymer **P2** und das gegebenenfalls enthaltene Polyetherurethan-Polymer **P3** werden getrennt voneinander hergestellt. Sie werden somit erst nach der Herstellung, insbesondere erst in der erfindungsgemässen feuchtigkeitshärtenden Zusammensetzung, miteinander vermischt.

Bevorzugt enthält die feuchtigkeitshärtende Zusammensetzung neben den Polymeren **P1** und gegebenenfalls **P2** und **P3** gar keine oder falls doch nur eine geringe Menge an weiteren Isocyanatgruppen-haltigen Polymeren, insbesondere höchstens 20 Gewichtsteile, bevorzugt höchstens 15 Gewichtsteile, insbesondere höchstens 10 Gewichtsteile, am meisten bevorzugt höchstens 5 Gewichtsteile an weiteren Isocyanatgruppen-haltigen Polymeren bezogen auf 100 Gewichtsteile der Summe aus Polymeren **P1** und **P2** und **P3.**

Feuchtigkeitshärtende Zusammensetzung gemäss Anspruch 11 oder 12, dadurch gekennzeichnet, dass die Zusammensetzung mindestens 0.5 Gewichts-% Polymer **P2** und/oder mindestens 0.5 Gewichts-% Polymer **P3,** bezogen auf die gesamte Zusammensetzung, enthält.

Die feuchtigkeitshärtende Zusammensetzung enthält mehr als 20 Gewichts-% Russ, bezogen auf die gesamte Zusammensetzung, bevorzugt zwischen 20.5 und 25 Gewichts-% Russ, insbesondere zwischen 21 und 24 Gewichts-% Russ, bezogen auf die gesamte Zusammensetzung.

Geeignet sind alle industriell hergestellten Russe, welche normalerweise in Polyurethanzusammensetzungen eingesetzt werden.

Russ ist ein verstärkender Füllstoff, welcher die Anfangsfestigkeit und die mechanischen Eigenschaften verbessert und zudem noch Licht- und Oxidationsstabilität verbessert.

Normalerweise ist es schwierig, mehr als 20 Gewichts-% Russ in solche Zusammensetzungen einzubringen, ohne die Applikationseigenschaften, wie zum Beispiel benötigte Auspresskräfte, stark zu beeinträchtigen. Überraschenderweise wurde jedoch gefunden, dass durch die Verwendung von Polymeren **P1** jedoch höhere Anteile an Russ möglich sind, ohne die Applikationseigenschaften zu beeinträchtigen.

Bevorzugt enthält die feuchtigkeitshärtende Zusammensetzung zusätzlich mindestens einen weiterer Bestandteil ausgewählt aus Silan-Haftvermittlern, blockierten Aminen, Diisocyanat-Oligomeren, Trocknungsmitteln, Katalysatoren und Stabilisatoren.

In einer Ausführungsform der Erfindung enthält die feuchtigkeitshärtende Zusammensetzung bevorzugt zusätzlich mindestens ein blockiertes Amin.

Ein geeignetes blockiertes Amin weist bevorzugt mindestens eine Aldiminogruppe oder Oxazolidinogruppe auf. Bei Kontakt mit Feuchtigkeit reagiert es unter Hydrolyse und Freisetzung der Aminogruppe mit vorhandenen Isocyanatgruppen und kann eine schnelle, blasenfreie Aushärtung, eine besonders nichtklebrige Oberfläche und/oder besonders gute mechanische Eigenschaften begünstigen.

Bevorzugte Oxazolidine sind Mono-Oxazolidine oder Bis-Oxazolidine, insbesondere solche abgeleitet von Isobutyraldehyd, Benzaldehyd oder substituiertem Benzaldehyd, insbesondere Benzaldehyd, welches in para-Stellung mit einer gegebenenfalls verzweigten Alkylgruppe mit 10 bis 14 C-Atomen substituiert ist.

Besonders bevorzugt sind Mono-Oxazolidine abgeleitet von N-Alkylethanolaminen wie N-n-Butylethanolamin, oder Bis-Oxazolidine aus der Umsetzung von OH-funktionellen Mono-Oxazolidinen abgeleitet von Diethanolamin mit Diisocyanaten, insbesondere 1,6-Hexandiisocyanat.

Geeignete Aldimine sind insbesondere Di- oder Trialdimine aus der Umsetzung von handelsüblichen primären Di- oder Triaminen mit Aldehyden, welche nicht enolisierbar sind. Dies sind Aldehyde, welche in alpha-Stellung zum Kohlenstoffatom der Aldehydgruppe kein Wasserstoffatom aufweisen.

Bevorzugte blockierte Amine sind ausgewählt aus Aldiminen der Formel (I) und (II), 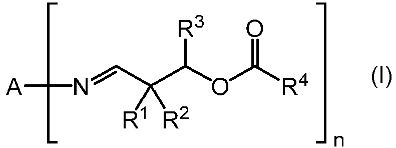 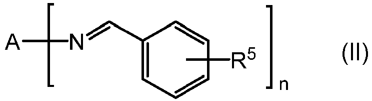 wobei
n für 2 oder 3 steht,
A für einen n-wertigen, gegebenenfalls Ether-Sauerstoff aufweisendenen Kohlenwasserstoffrest mit einem Molekulargewicht im Bereich von 28 bis 6'000 g/mol steht,
R¹ und R² unabhängig voneinander jeweils für einen einwertigen Kohlenwasserstoffrest mit 1 bis 12 C-Atomen oder zusammen für einen zweiwertigen Kohlenwasserstoffrest mit 4 bis 12 C-Atomen, der Teil eines gegebenenfalls substituierten, carbocyclischen Rings mit 5 bis 8, bevorzugt 6, C-Atomen ist, stehen,
R³ für einen Wasserstoffrest oder einen linearen oder verzweigten Alkyl-, Arylalkyl- oder Alkoxycarbonyl-Rest mit 1 bis 12 C-Atomen steht,
R⁴ für einen Wasserstoffrest oder einen einwertigen Kohlenwasserstoffrest mit 1 bis 20 C-Atomen steht, und
R⁵ für einen Alkyl- oder Alkoxy-Rest mit 6 bis 20 C-Atomen steht.

Bevorzugt steht A für einen alipahtischen, cycloaliphatischen oder arylaliphatischen Rest, insbesondere mit einem Molekulargewicht im Bereich von 28 bis 500 g/mol, insbesondere für einen Rest ausgewählt aus der Gruppe bestehend aus 1,6-Hexylen, (1,5,5-Trimethylcyclohexan-1-yl)methan-1,3, 4(2)-Methyl-1,3-cyclohexylen, 1,3-Cyclohexylen-bis(methylen), 1,4-Cyclohexylen-bis-(methylen), 1,3-Phenylen-bis(methylen), 1,2-Cyclohexylen, 1,3-Cyclohexylen, 1,4-Cyclohexylen, Methylen-bis(2-methylcyclohexan-4-yl), (Bicyclo[2.2.1]heptan-2,5(2,6)-diyl)dimethylen, (Tricyclo[5.2.1.0^{2,6}]decan-3(4),8(9)-diyl)dimethy-len, α,ω-Polyoxypropylen mit einem mittleren Molekulargewicht Mₙ im Bereich von 170 bis 500 g/mol und Trimethylolpropan- oder Glycerin-gestartetes Tris-(ω-polyoxypropylen) mit einem mittleren Molekulargewicht Mₙ im Bereich von 330 bis 500 g/mol.

Bevorzugt stehen R¹ und R² jeweils für Methyl.

Bevorzugt steht R³ für einen Wasserstoffrest.

Bevorzugt steht R⁴ für Methyl oder Undecyl.

Bevorzugt steht R⁵ für einen in para-Stellung stehenden, gegebenenfalls verzweigten Alkylrest mit 10 bis 14 C-Atomen.

Besonders bevorzugte blockierte Amine sind ausgewählt aus der Gruppe bestehend aus N,N'-Bis(2,2-dimethyl-3-lauroyloxypropyliden)hexylen-1,6-diamin, N,N'-Bis(2,2-dimethyl-3-acetoxypropyliden)-3-aminomethyl-3,5,5-trimethylcyclohexylamin, N,N'-Bis(2,2-dimethyl-3-lauroyloxypropyliden)-3-aminomethyl-3,5,5-trimethylcyclohexylamin, N,N'-Bis(4-C₁₀₋₁₄-alkylbenzyliden)-3-aminomethyl-3,5,5-trimethylcyclohexylamin, N,N'-Bis(2,2-dimethyl-3-acetoxypropyliden)-polyoxypropylendiamin mit einem mittleren Molekulargewicht Mₙ im Bereich von 450 bis 880 g/mol, N,N'-Bis(2,2-dimethyl-3-lauroyloxypropyliden)polyoxy-propylendiamin mit einem mittleren Molekulargewicht Mₙ im Bereich von 750 bis 1'050 g/mol, N,N'-Bis(4-C₁₀₋₁₄-alkylbenzyliden)polyoxypropylendiamin mit einem mittleren Molekulargewicht Mₙ im Bereich von 680 bis 1'100 g/mol, N,N',N"-Tris(2,2-dimethyl-3-acetoxypropyliden)polyoxypropylentriamin mit einem mittleren Molekulargewicht Mₙ im Bereich von 730 bis 880 g/mol, N,N',N"-Tris(2,2-dimethyl-3-lauroyloxypropyliden)polyoxypropylentriamin mit einem mittleren Molekulargewicht Mₙ im Bereich von 1'150 bis1'300 g/mol und N,N',N"-Tris(4-C₁₀₋₁₄-alkylbenzyliden)polyoxypropylentriamin mit einem mittleren Molekulargewicht Mₙ im Bereich von 1'000 bis 1'350 g/mol.

Bevorzugt enthält die erfindungsgemässe Zusammensetzung mindestens einen Silan-Haftvermittler. Dafür geeignet sind Organoalkoxysilane, insbesondere Epoxysilane wie insbesondere 3-Glycidoxypropyltrimethoxysilan oder 3-Glycidoxypropyltriethoxysilan, (Meth)acrylosilane, Anhydridosilane, Carbamatosilane, Alkylsilane oder Iminosilane, oder oligomere Formen dieser Silane. Der Einsatz von Silan-Haftvermittlern verbessert insbesondere die Haftung auf Glas- und Keramiksubstraten. Bevorzugt enthält die Zusammensetzung zwischen 0.1 und 1.0 Gewichts-% Silan-Haftvermittler, bezogen auf die gesamte Zusammensetzung.

In bevorzugten Ausführungsformen enthält die feuchtigkeitshärtende Zusammensetzung zwischen 10 und 30 Gewichts-% nicht verdickenden Füllstoff, bezogen auf die gesamte Zusammensetzung.

Nicht verdickende Füllstoffe sind solche Füllstoffe, die keinen wesentlichen Einfluss auf die Rheologie haben. Im Gegensatz dazu werden Russ und Kieselsäuren zu den verdickenden Füllstoffen gezählt.

Geeignete nicht verdickende Füllstoffe sind insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, calcinierte Kaoline, Schichtsilikate wie Glimmer oder Talk, Zeolithe, Aluminiumhydroxide, Magnesiumhydroxide, Graphit, Metall-Pulver, beispielsweise von Aluminium, Kupfer, Eisen, Silber oder Stahl, PVC-Pulver oder Leichtfüllstoffe wie Glashohlkugeln oder gasgefüllte Kunststoffhohlkugeln (microspheres), insbesondere die unter dem Handelsnamen Expancel^{®} (von Akzo Nobel) erhältlichen Typen.

Bevorzugt sind Calciumcarbonate, welche gegebenenfalls mit Fettsäuren, insbesondere Stearaten, beschichtet sind, sowie calcinierte Kaoline.

In besonders bevorzugten Ausführungsformen ist der nicht verdickende Füllstoff ausgewählt aus Kreide und Kaolin und Mischungen davon.

Geeignete Weichmacher sind insbesondere Carbonsäureester wie Phthalate, insbesondere Diisononylphthalat (DINP), Diisodecylphthalat (DIDP) oder Di(2-propylheptyl)phthalat (DPHP), hydrierte Phthalate bzw. 1,2-Cyclohexandicarbonsäureester, insbesondere hydriertes Diisononylphthalat bzw. Diisononyl-1,2-cyclohexandicarboxylat (DINCH), Terephthalate, insbesondere Bis(2-ethylhexyl)terephthalat (DOTP) oder Diisononylterephthalat (DINT), hydrierte Terephthalate bzw. 1,4-Cyclohexandicarbonsäureester, insbesondere hydriertes Bis(2-ethylhexyl)terephthalat bzw. Bis(2-ethylhexyl)-1,4-cyclohexandicar-boxylat oder hydriertes Diisononylterephthalat bzw. Diisononyl-1,4-cyclo-hexandicarboxylat, Isophthalate, Trimellitate, Adipate, insbesondere Dioctyladipat, Azelate, Sebacate, Benzoate, Glykolether, Glykolester, Weichmacher mit Polyetherstruktur, insbesondere Polypropylenoxid-monole, -diole oder - triole mit blockierten Hydroxylgruppen, insbesondere in der Form von Acetatgruppen, organische Phosphor- oder Sulfonsäureester, Polybutene, Polyisobutene oder von natürlichen Fetten oder Ölen abgeleitete Weichmacher, insbesondere epoxidiertes Soja- oder Leinöl.

Bevorzugte Weichmacher sind Phthalate oder Weichmacher mit Polyetherstruktur.

Geeignete Diisocyanat-Oligomere sind insbesondere HDI-Biurete wie Desmodur^{®} N 100 oder N 3200 (von Covestro AG), Tolonate^{®} HDB oder HDB-LV (von Vencorex) oder Duranate^{®} 24A-100 (von Asahi Kasei); HDI-Isocyanurate wie Desmodur^{®} N 3300, N 3600 oder N 3790 BA (alle von Covestro), Tolonate^{®} HDT, HDT-LV oder HDT-LV2 (von Vencorex), Duranate^{®} TPA-100 oder THA-100 (von Asahi Kasei) oder Coronate^{®} HX (vonTosoh Corp.); HDI-Uretdione wie Desmodur^{®} N 3400 (von Covestro); HDI-Iminooxadiazindione wie Desmodur^{®} XP 2410 (von Covestro); HDI-Allophanate wie Desmodur^{®} VP LS 2102 (von Covestro); IPDI-Isocyanurate wie beispielsweise in Lösung als Desmodur^{®} Z 4470 (von Covestro) oder in fester Form als Vestanat^{®} T1890/ 100 (von Evonik Industries); TDI-Oligomere wie Desmodur^{®} IL (von Covestro); oder gemischte Isocyanurate auf Basis TDI/HDI wie Desmodur^{®} HL (von Covestro).

Geeignete Katalysatoren sind Katalysatoren für die Beschleunigung der Reaktion von Isocyanatgruppen, insbesondere Organozinn(IV)-Verbindungen wie insbesondere Dibutylzinndiacetat, Dibutylzinndilaurat, Dibutylzinndichlorid, Dibutylzinndiacetylacetonat, Dimethylzinndilaurat, Dioctylzinndiacetat, Dioctylzinndilaurat oder Dioctylzinndiacetylacetonat, Komplexverbindungen von Bismut(III) oder Zirkonium(IV), insbesondere mit Liganden ausgewählt aus Alkoholaten, Carboxylaten, 1,3-Diketonaten, Oxinat, 1,3-Ketoesteraten und 1,3-Ketoamidaten, oder tertiäre Aminogruppen enthaltende Verbindungen wie insbesondere 2,2'-Dimorpholinodiethylether (DMDEE).

Für den Fall, dass die feuchtigkeitshärtende Zusammensetzung blockierte Amine enthält, sind geeignete Katalysatoren weiterhin Katalysatoren für die Hydrolyse der blockierten Aminogruppen, insbesondere organische Säuren, insbesondere Carbonsäuren wie 2-Ethylhexansäure, Laurinsäure, Stearinsäure, Isostearinsäure, Ölsäure, Neodecansäure, Benzoesäure, Salicylsäure oder 2-Nitrobenzoesäure, organische Carbonsäureanhydride wie Phthalsäureanhydrid, Hexahydrophthalsäureanhydrid oder Hexahydromethylphthalsäureanhydrid, Silylester von Carbonsäuren, organische Sulfonsäuren wie Methansulfonsäure, p-Toluolsulfonsäure oder 4-Dodecylbenzolsulfonsäure, Sulfonsäureester, andere organische oder anorganische Säuren, oder Mischungen der vorgenannten Säuren und Säureester. Besonders bevorzugt sind Carbonsäuren, insbesondere aromatische Carbonsäuren wie Benzoesäure, 2-Nitrobenzoesäure oder insbesondere Salicylsäure.

Geeignet sind insbesondere auch Kombinationen von verschiedenen Katalysatoren.

Geeignete Stabilisatoren sind insbesondere Stabilisatoren gegen Oxidation, Wärme, Licht oder UV-Strahlung, insbesondere Titandioxide, Eisenoxide, Zinkoxide, Benzophenone, Benzotriazole, Verbindungen mit 2,6-Di-tert.butylphenol-Gruppen, wie sie beispielsweise unter dem Handelsnamen Irganox^{®} (von BASF) bekannt sind, Verbindungen mit 2,2,6,6-Tetramethylpiperidin-Gruppen, sogenannte HALS (hindered amine light stabilizers), wie sie beispielsweise unter dem Handelsnamen Tinuvin^{®} (von BASF) bekannt sind, oder Phosphor-haltige Verbindungen, wie sie beispielsweise unter dem Handelsnamen Irgafos^{®} (von BASF) bekannt sind.

Die feuchtigkeitshärtende Zusammensetzung kann weitere Zusätze enthalten, insbesondere
- anorganische oder organische Pigmente, insbesondere Titandioxid, Chromoxide oder Eisenoxide;
- Fasern, insbesondere Glasfasern, Kohlefasern, Metallfasern, Keramikfasern, Kunststofffasern wie Polyamidfasern oder Polyethylenfasern, oder Naturfasern wie Wolle, Cellulose, Hanf oder Sisal;
- Nanofüllstoffe wie Graphen oder Carbon Nanotubes;
- Farbstoffe;
- Trocknungsmittel, insbesondere Molekularsiebpulver, Calciumoxid, hochreaktive Isocyanate wie p-Tosylisocyanat, Mono-Oxazolidine wie Incozol^{®} 2 (von Incorez) oder Orthoameisensäureester;
- Haftvermittler, insbesondere Organoalkoxysilane, insbesondere Epoxysilane wie insbesondere 3-Glycidoxypropyltrimethoxysilan oder 3-Glycidoxypropyltriethoxysilan, (Meth)acrylosilane, Anhydridosilane, Carbamatosilane, Alkylsilane oder Iminosilane, oder oligomere Formen dieser Silane, oder Titanate;
- weitere Katalysatoren, welche die Reaktion der Isocyanatgruppen beschleunigen;
- Rheologie-Modifizierer, insbesondere Verdickungsmittel, insbesondere Schichtsilikate wie Bentonite, Derivate von Rizinusöl, hydriertes Rizinusöl, Polyamide, Polyamidwachse, Polyurethane, Harnstoffverbindungen, pyrogene Kieselsäuren, Celluloseether oder hydrophob modifizierte Polyoxyethylene;
- Lösemittel, insbesondere Aceton, Methylacetat, tert. Butylacetat, 1-Methoxy-2-propylacetat, Ethyl-3-ethoxypropionat, Diisopropylether, Diethylenglykoldiethylether, Ethylenglykoldiethylether, Ethylenglykolmonobutylether, Ethylen-glykolmono-2-ethylhexylether, Acetale wie Propylal, Butylal, 2-Ethylhexylal, Dioxolan, Glycerolformal oder 2,5,7,10-Tetraoxaundecan (TOU), Toluol, Xylol, Heptan, Octan, Naphtha, White Spirit, Petrolether oder Benzin, insbesondere Solvesso^{™}-Typen (von Exxon), sowie Propylencarbonat, Dimethylcarbonat, Butyrolacton, N-Methylpyrrolidon, N-Ethylpyrrolidon, p-Chlorobenzotrifluorid oder Benzotrifluorid;
- natürliche Harze, Fette oder Öle wie Kolophonium, Schellack, Leinöl, Rizinusöl oder Sojaöl;
- nicht-reaktive Polymere, insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO);
- flammhemmende Substanzen, insbesondere die bereits genannten Füllstoffe Aluminiumhydroxid oder Magnesiumhydroxid, sowie insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlor-propyl)phosphat, isopropyliertes Triphenylphosphat, Mono-, Bis- oder Tris-(isopropylphenyl)phosphate unterschiedlichen Isopropylierungsgrades, Resorcinol-bis(diphenylphosphat), Bisphenol-A-bis(diphenylphosphat) oder Ammoniumpolyphosphate;
- Additive, insbesondere Netzmittel, Verlaufmittel, Entschäumer, Entlüfter oder Biozide;
oder weitere üblicherweise in feuchtigkeitshärtenden Polyurethan-Zusammensetzungen eingesetzte Substanzen.

Es kann sinnvoll sein, gewisse Substanzen vor dem Einmischen in die Zusammensetzung chemisch oder physikalisch zu trocknen.

Bevorzugt enthält die erfindungsgemässe Zusammensetzung wenig Lösemittel. Insbesondere enthält sie weniger als 5 Gewichts-%, bevorzugt weniger als 2.5 Gewichts-%, Lösemittel. Am meisten bevorzugt ist die erfindungsgemässe Zusammensetzung im Wesentlichen frei von Lösemitteln.

Bevorzugt enthält die feuchtigkeitshärtende Zusammensetzung
- 25 bis 50 Gewichts-% Polymere **P1,**
- optional bis zu 1.5 Gewichts-% Polymer **P2,**
- optional bis zu 2 Gewichts-% Polymer **P3,**
- 21 bis 25 Gewichts-% Russ,
- 10 bis 30 Gewichts-% nicht verdickende Füllstoffe,
- 10 bis 20 Gewichts-% Weichmacher,
und gegebenenfalls weitere Bestandteile, insbesondere Silan-Haftvermittler, blockierte Amine, Diisocyanat-Oligomere, Trocknungsmittel, Katalysatoren und/oder Stabilisatoren, mit der Massgabe, dass mindestens eines der Polymere **P2** und **P3** in der Zusammensetzung enthalten ist.

Bevorzugt enthält die feuchtigkeitshärtende Zusammensetzung mindestens 0.5 Gewichts-% Polymer **P2** und/oder mindestens 0.5 Gewichts-% Polymer **P3,** bezogen auf die gesamte Zusammensetzung.

Eine besonders bevorzugte Ausführungsform der erfindungsgemässen Zusammensetzung enthält zwischen 0.5 und 1.5 Gewichts-% Polymer **P2,** bezogen auf die gesamte Zusammensetzung, sowie kein Polymer P3.

Eine weitere besonders bevorzugte Ausführungsform der erfindungsgemässen Zusammensetzung enthält zwischen 0.5 und 2.0 Gewichts-% Polymer **P3,** bezogen auf die gesamte Zusammensetzung, sowie kein Polymer P2.

Eine weitere besonders bevorzugte Ausführungsform der erfindungsgemässen Zusammensetzung enthält zwischen 0.5 und 1.5 Gewichts-% Polymer **P2,** bezogen auf die gesamte Zusammensetzung, sowie zwischen 0.5 und 2.0 Gewichts-% Polymer **P3,** bezogen auf die gesamte Zusammensetzung.

Bevorzugt enthält die feuchtigkeitshärtende Zusammensetzung in allen Ausführungsformen weniger als 0.1 Gewichts-% monomere Diisocyanate. Eine solche Zusammensetzung kann in vielen Ländern ohne Gefahrstoff-Einstufung transportiert und verkauft werden.

Die feuchtigkeitshärtende Zusammensetzung wird insbesondere unter Ausschluss von Feuchtigkeit hergestellt und bei Umgebungstemperatur in feuchtigkeitsdichten Gebinden aufbewahrt. Ein geeignetes feuchtigkeitsdichtes Gebinde besteht insbesondere aus einem gegebenenfalls beschichteten Metall und/oder Kunststoff und stellt insbesondere ein Fass, ein Container, ein Hobbock, ein Eimer, ein Kanister, eine Büchse, ein Beutel, ein Schlauchbeutel, eine Kartusche oder eine Tube dar.

Die feuchtigkeitshärtende Zusammensetzung ist bevorzugt einkomponentig. Sie ist bei geeigneter Verpackung und Aufbewahrung lagerstabil, typischerweise während mehreren Monaten bis zu einem Jahr oder länger.

Die feuchtigkeitshärtende Zusammensetzung beginnt während und nach der Applikation unter dem Einfluss von Feuchtigkeit bzw. Wasser auszuhärten. Zur Beschleunigung der Aushärtung kann der Zusammensetzung bei der Applikation eine Beschleuniger-Komponente, welche Wasser und gegebenenfalls einen Katalysator und/oder einen Härter enthält, zugemischt werden, oder die Zusammensetzung kann nach ihrer Applikation mit einer solchen Beschleuniger-Komponente in Kontakt gebracht werden.

Bei der Aushärtung reagieren die Isocyanatgruppen unter dem Einfluss von Feuchtigkeit untereinander. Für den Fall, dass die feuchtigkeitshärtende Zusammensetzung ein blockiertes Amin enthält, reagieren die Isocyanatgruppen zudem mit den hydrolysierenden blockierten Aminogruppen. Die Gesamtheit dieser zur Aushärtung der Zusammensetzung führenden Reaktionen der Isocyanatgruppen wird auch als Vernetzung bezeichnet. Als Ergebnis davon entsteht die ausgehärtete Zusammensetzung.

Die zur Aushärtung der Zusammensetzung benötigte Feuchtigkeit gelangt bevorzugt aus der Luft (Luftfeuchtigkeit) durch Diffusion in die Zusammensetzung. Dabei bildet sich an den mit Luft in Kontakt stehenden Oberflächen der Zusammensetzung eine feste Schicht ausgehärteter Zusammensetzung ("Haut"). Die Aushärtung setzt sich entlang der Diffusionsrichtung von aussen nach innen fort, wobei die Haut zunehmend dicker wird und schliesslich die ganze applizierte Zusammensetzung umfasst. Die Feuchtigkeit kann zusätzlich oder vollständig auch aus einem oder mehreren Substrat(en), auf welche(s) die Zusammensetzung appliziert wurde, in die Zusammensetzung gelangen und/oder aus einer Beschleuniger-Komponente stammen, welche der Zusammensetzung bei der Applikation zugemischt oder nach der Applikation mit dieser in Kontakt gebracht wird, beispielsweise durch Bestreichen oder Besprühen.

Die feuchtigkeitshärtende Zusammensetzung wird bevorzugt bei Umgebungstemperatur oder leicht erwärmt appliziert, insbesondere im Bereich von etwa -5 bis 80°C, bevorzugt im Bereich von 0 bis 70°C, insbesondere 25 bis 65°C. Falls Polymer P2 enthalten ist wird die feuchtigkeitshärtende Zusammensetzung bevorzugt im erwärmten Zustand appliziert, beispielsweise mit einer Temperatur zwischen 40°C und 80°C.

Die Aushärtung der feuchtigkeitshärtenden Zusammensetzung erfolgt bevorzugt bei Umgebungstemperatur.

Die feuchtigkeitshärtende Zusammensetzung verfügt über eine lange Verarbeitungszeit (Offenzeit) und eine schnelle Aushärtung.

Als "Offenzeit" wird die Zeitspanne bezeichnet, während der die Zusammensetzung nach der Applikation ohne Einbussen in ihrer Funktionsfähigkeit verarbeitet oder nachbearbeitet werden kann. Für den Fall, dass die Zusammensetzung als Klebstoff verwendet wird, bezeichnet die Offenzeit insbesondere auch die Zeitspanne, innerhalb welcher eine Verklebung nach ihrer Applikation gefügt sein muss, um eine genügende Haftung aufzubauen. Die Offenzeit ist spätestens dann überschritten, wenn es zur Hautbildung gekommen ist oder wenn kein ausreichender Haftungsaufbau zu den Substraten mehr stattfindet.

Bevorzugt wird die feuchtigkeitshärtende Zusammensetzung verwendet als elastischer Klebstoff und/oder Dichtstoff, insbesondere für Klebe- oder Abdichtungsanwendungen in der Bau- und Fertigungsindustrie oder im Fahrzeugbau, insbesondere für die Parkettverklebung, Montage, Anbauteilverklebung, Modulverklebung, Scheibenverklebung, Fugenabdichtung, Karosserieabdichtung, Nahtabdichtung oder Hohlraumversiegelung.

Elastische Verklebungen im Fahrzeugbau sind beispielsweise das Ankleben von Teilen wie Kunststoffabdeckungen, Zierleisten, Flansche, Stosstangen, Führerkabinen oder andere Anbauteile an die lackierte Karosserie eines Fahrzeugs, oder das Einkleben von Scheiben in die Karosserie, wobei die Fahrzeuge insbesondere Automobile, Lastkraftwagen, Busse, Schienenfahrzeuge oder Schiffe darstellen.

Besonders bevorzugt ist die Verwendung als Klebstoff für die Verglasung von Fahrzeugen, insbesondere für die Ersatzverglasung von Fahrzeugen.

Die feuchtigkeitshärtende Zusammensetzung ist bevorzugt so formuliert, dass sie bei Raumtemperatur oder leicht erwärmt eine pastöse, unter üblichem Auspressdruck fliessfähige Konsistenz mit strukturviskosen Eigenschaften aufweist. Eine solche Zusammensetzung wird mittels einer geeigneten Vorrichtung appliziert, beispielsweise aus handelsüblichen Kartuschen oder Fässern oder Hobbocks, insbesondere in Form einer Raupe, wobei diese eine im Wesentlichen runde oder dreieckige Querschnittsfläche aufweisen kann.

Geeignete Substrate, welche mit der feuchtigkeitshärtenden Zusammensetzung verklebt und/oder abgedichtet werden können, sind insbesondere
- Glas, Glaskeramik oder mit Siebdruckkeramik beschichtetes Glas oder Polycarbonat;
- Metalle oder Legierungen wie Aluminium, Kupfer, Eisen, Stahl, Buntmetalle, inklusive oberflächenveredelte Metalle oder Legierungen wie verzinkte oder verchromte Metalle;
- beschichtete oder lackierte Substrate, insbesondere pulverbeschichtete Metalle oder Legierungen oder lackierte Bleche;
- Farben oder Lacke, insbesondere Automobildecklacke;
- ausgehärtete Klebstoffe, insbesondere auf der Basis von Polyurethan, silanmodifiziertem Polymer oder Polysulfid, insbesondere gealterte Klebstoffe (Restkleberaupe), oder Karosserieflansch, welcher durchgehend oder stellenweise Restkleberaupe aufweist;
- Kunststoffe wie Hart- oder Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Reparatur- oder Nivelliermassen auf Basis PCC (Polymer-modifizierter Zementmörtel) oder ECC (Epoxidharz-modifizierter Zementmörtel);
- Isolierschäume, insbesondere aus EPS, XPS, PUR, PIR, Steinwolle, Glaswolle oder geschäumtem Glas (Foamglas);
- Beton, Mörtel, Zementestrich, Faserzement, insbesondere Faserzement-Platten, Backstein, Ziegel, Gips, insbesondere Gips-Platten oder Anhydrid-Estrich, oder Natursteine wie Granit oder Marmor, lackierte Fliesen oder gestrichener Beton, Asphalt oder Bitumen.
- Leder, Textilien, Papier, Holz, mit Harzen wie Phenol-, Melamin- oder Epoxidharzen gebundene Holzwerkstoffe, Harz-Textil-Verbundwerkstoffe oder weitere sogenannte Polymer-Composites.

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt und/oder abgedichtet werden können zwei gleichartige oder zwei verschiedene Substrate.

Ein weiterer Gegenstand der Erfindung ist ein Verfahren zum Verkleben oder Abdichten, umfassend die Schritte
(i) Applizieren der beschriebenen feuchtigkeitshärtenden Zusammensetzung
   - auf ein erstes Substrat und Kontaktieren der Zusammensetzung mit einem zweiten Substrat innerhalb der Offenzeit der Zusammensetzung, oder
   - auf ein erstes und auf ein zweites Substrat und Fügen der beiden Substrate innerhalb der Offenzeit der Zusammensetzung, oder
   - zwischen zwei Substrate,
(ii) Aushärten der Zusammensetzung durch Kontakt mit Feuchtigkeit.

Bevorzugt ist mindestens eines der Substrate ausgewählt aus der Gruppe bestehend aus Glas, Glaskeramik, mit Siebdruckkeramik beschichtetes Glas oder Polycarbonat, Metallen, Legierungen, pulverbeschichteten Metallen oder Legierungen, Farben und Lacken und ausgehärtetem Klebstoff, insbesondere Restkleberaupe und/oder mit Automobildecklacken lackierte Bleche.

Aus der Applikation und Aushärtung der feuchtigkeitshärtenden Zusammensetzung bzw. aus dem Verfahren zum Verkleben oder Abdichten wird ein Artikel erhalten, welcher mit der Zusammensetzung verklebt oder abgedichtet ist. Dieser Artikel kann ein Bauwerk oder ein Teil davon sein, insbesondere ein Bauwerk des Hoch- oder Tiefbaus, eine Brücke, ein Dach, ein Treppenhaus oder eine Fassade, oder er kann ein industrielles Gut oder ein Konsumgut sein, insbesondere ein Fenster, ein Rohr, ein Rotorblatt einer Windkraftanlage, eine Haushaltmaschine oder ein Transportmittel wie insbesondere ein Automobil, ein Bus, ein Lastkraftwagen, ein Schienenfahrzeug, ein Schiff, ein Flugzeug oder ein Helikopter, oder ein Anbauteil davon.

Ein weiterer Gegenstand der Erfindung ist somit ein Artikel, erhalten aus dem beschriebenen Verfahren zum Verkleben oder Abdichten.

Besonders bevorzugt wird das Verfahren zum Verkleben eingesetzt für das elastische Verkleben von Scheiben an Fahrzeugen, insbesondere für die Ersatzverglasung, wo eine gute Haftung auf Restkleberaupe besonders wichtig ist.

Die feuchtigkeitshärtende Zusammensetzung weist vorteilhafte Eigenschaften auf. Sie verfügt über besonders gute Haftungseigenschaften ohne Delaminationstendenz, besonders gute Applikationseigenschaften, insbesondere einer besonders guten Auspressbarkeit bei hoher Standfestigkeit, sowie besonders gute Anfangsfestigkeit ohne Abrutschen von Substraten, bei unverändert guter Aushärtung, Festigkeit, Dehnbarkeit, Elastizität und Gefahrstoff-Einstufung. Damit ist die Zusammensetzung besonders geeignet als elastischer Klebstoff im Fahrzeugbau, insbesondere für den Einsatz von Scheiben im Fahrzeugbau oder den Ersatz von defekten Windschutzscheiben an Automobilen zur Reparatur.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" (NK) wird eine Temperatur von 23±1°C und eine relative Luftfeuchtigkeit (r.h.) von 50±5% bezeichnet.

Die verwendeten Chemikalien waren, sofern nicht anders bezeichnet, von Sigma-Aldrich Chemie GmbH.

### Herstellung von Isocyanatgruppen-haltigen Polymeren:

Die **Viskosität** wurde mit einem thermostatisierten Kegel-Platten-Viskosimeter Rheotec RC30 (Kegeldurchmesser 25 mm, Kegelwinkel 1°, Kegelspitze-Platten-Abstand 0.5 mm, Scherrate 50 s⁻¹) gemessen.

Der **Gehalt an monomerem Diisocyanat** wurde mittels HPLC (Detektion über Photodiodenarray; 0.04 M Natriumacetat / Acetonitril als mobile Phase) nach vorgängiger Derivatisierung mittels N-Propyl-4-nitrobenzylamin bestimmt.

### Polymer P1-1 (Polymer P1a erfindungsgemäss):

727.0 g Acclaim^{®} 4200 (Polyoxypropylendiol, OH-Zahl 28 mg KOH/g, von Covestro) und 273.0 g 4,4'-Diphenylmethandiisocyanat (Desmodur^{®} 44 MC L, von Covestro) wurden nachbekanntem Verfahren zu einem Polyetherurethan-Polymer mit einem NCO-Gehalt von 7.6 Gewichts-%, einer Viskosität von 5.2 Pa·s bei 20°C und einem Gehalt an 4,4'-Diphenylmethandiisocyanat von ca. 18 Gewichts-% umgesetzt.

Anschliessend wurden die flüchtigen Bestandteile, insbesondere ein Grossteil des 4,4'-Diphenylmethandiisocyanats, wie für Polymer **P1-1** beschrieben entfernt. Das so erhaltene Polyetherurethan-Polymer wies einen NCO-Gehalt von 1.8 Gewichts-%, eine Viskosität von 15.2 Pa·s bei 20°C und einen Gehalt an 4,4'-Diphenylmethandiisocyanat von 0.08 Gewichts-% auf.

### Polymer P1-2 (Polymer P1b erfindungsgemäss):

725.0 g Desmophen^{®} 5031 BT (Glycerin-gestartetes Ethylenoxid-terminiertes Polyoxypropylentriol, OH-Zahl 28 mg KOH/g, von Covestro) und 275.0 g 4,4'-Diphenylmethandiisocyanat (Desmodur^{®} 44 MC L, von Covestro) wurden nach bekanntem Verfahren zu einem Polyetherurethan-Polymer mit einem NCO-Gehalt von 7.6 Gewichts-%, einer Viskosität von 6.5 Pa·s bei 20°C und einem Gehalt an 4,4'-Diphenylmethandiisocyanat von ca. 20 Gewichts-% umgesetzt. Anschliessend wurden die flüchtigen Bestandteile, insbesondere ein Grossteil des 4,4'-Diphenylmethandiisocyanats, in einem Kurzwegverdampfer destillativ entfernt (Manteltemperatur 180°C, Druck 0.1 bis 0.005 mbar, Kondensationstemperatur 47°C). Das so erhaltene Polyetherurethan-Polymer wies einen NCO-Gehalt von 1.7 Gewichts-%, eine Viskosität von 19 Pa·s bei 20°C und einen Gehalt an 4,4'-Diphenylmethandiisocyanat von 0.04 Gewichts-% auf.

### Polymer P1Ra (nicht erfindungsgemässes lineares Polyetherurethan-Polymer):

400 g Polyoxypropylen-Diol (Acclaim^{®} 4200, von Covestro AG; OH-Zahl 28.5 mg KOH/g) und 52 g 4,4'-Diphenylmethandiisocyanat (Desmodur^{®} 44 MC L, von Covestro AG) wurden nach bekanntem Verfahren bei 80 °C zu einem bei Raumtemperatur flüssigen, NCO-terminierten Polymer mit einem Isocyanatgruppen-Gehalt von 1.85 Gewichts-% und einem Gehalt an monomerem 4,4'-Diphenylmethandiisocyanat von ca. 2.1 Gewichts-% umgesetzt.

### Polymer P1Rb (nicht erfindungsgemässes verzweigtes Polyetherurethan-Polymer):

685 g Voranol^{®} CP 4755 (Glycerin-gestartetes Ethylenoxid-terminiertes Polyoxypropylen-Triol, OH-Zahl 35.0 mg KOH/g, OH-Funktionalität ca. 2.4; von Dow), 115 g 4,4'-Diphenylmethandiisocyanat (Desmodur^{®} 44 MC L, von Covestro) und 200 g Diisodecylphthalat (DIDP) wurden nach bekanntem Verfahren bei 80 °C zu einem Polyetherurethan-Polymer mit einem NCO-Gehalt von 1.9 Gewichts-% und einem Gehalt an monomerem 4,4'-Diphenylmethandiisocyanat von ca. 2.1 Gewichts-% umgesetzt. Wegen der hohen Viskosität des Polymers enthält es 20 Gewichts-% DIDP, das aus der Synthese verbleibt.

### Polymer P2-1 (Polymer P2 erfindungsgemäss):

709.0 g Polyesterdiol (Dynacoll^{®} 7360, teilkristallin, OH-Zahl 30.5 mg KOH/g, von Evonik) und 291.0 g 4,4'-Diphenylmethandiisocyanat (Desmodur^{®} 44 MC L, von Covestro) wurden nach bekanntem Verfahren bei 80 °C zu einem Polymer mit einem NCO-Gehalt von 7.8 Gewichts-%, einer Viskosität von 7.9 Pa·s bei 60°C und einem Gehalt an monomerem 4,4'-Diphenylmethandiisocyanat von ca. 16 Gewichts-% umgesetzt. Anschliessend wurden die flüchtigen Bestandteile, insbesondere ein Grossteil des monomeren 4,4'-Diphenylmethandiisocyanats, in einem Kurzwegverdampfer destillativ entfernt (Manteltemperatur 180°C, Druck 0.1 bis 0.005 mbar, Kondensationstemperatur 47°C). Das so erhaltene bei Raumtemperatur feste Polymer wies einen NCO-Gehalt von 1.8 Gewichts-%, eine Viskosität von 7.1 Pa·s bei 100°C und einen Gehalt an monomerem 4,4'-Diphenylmethandiisocyanat von 0.2 Gewichts-% auf.

### Polymer P3-1 (Polymer P3 erfindungsgemäss):

500.0 g PTMG-650 (Terathane^{®} 650, OH-Zahl 170 bis 180 mg KOH/g, von Invista) und 750.0 g 4,4'-Diphenylmethandiisocyanat (Desmodur^{®} 44 MC L, von Covestro) wurden nach bekanntem Verfahren bei 80 °C zu einem Polymer mit einem NCO-Gehalt von 15.4 Gewichts-% umgesetzt (NCO/OH ca. 4/1). Anschliessend wurden die flüchtigen Bestandteile, insbesondere ein Grossteil des monomeren 4,4'-Diphenylmethandiisocyanats, in einem Kurzwegverdampfer destillativ entfernt (Manteltemperatur 180°C, Druck 0.1 bis 0.005 mbar, Kondensationstemperatur 47°C). Das so erhaltene bei Raumtemperatur flüssige Polymer wies einen NCO-Gehalt von 6.0 Gewichts-% und einen Gehalt an monomerem 4,4'-Diphenylmethandiisocyanat von 0.05 Gewichts-% auf.

### Polymer P3-2 (Polymer P3 erfindungsgemäss):

Polymer P3-2 wurde genau wie Polymer **P3-1** hergestellt, wobei jedoch anstatt 500.0 g PTMG-650 als Diol 330 g Voranol P 400 (Voranol^{®} P 400, OH-Zahl 260 mg KOH/g, von Dow) verwendet wurde. Das so erhaltene bei Raumtemperatur flüssige Polymer wies einen NCO-Gehalt von 4.0 Gewichts-% und einen Gehalt an monomerem 4,4'-Diphenylmethandiisocyanat von 0.05 Gewichts-% auf.

Die Polymere **P1-1** und **P1-2** sind Polyetherurethan-Polymere **P1.** Die Polymere **P1Ra** und **P1Rb** sind vergleichbare Polyetherurethan-Polymere, die jedoch nicht erfindungsgemäss sind (bezüglich NCO/OH-Verhältnis). Polymer **P2-1** ist ein erfindungsgemässes Polymer **P2.** Polymere **P3-1** und **P3-2** sind erfindungsgemässe Polymere **P3.**

### Feuchtigkeitshärtende Zusammensetzungen:

### Zusammensetzungen Z1 bis Z17:

Für jede Zusammensetzung wurden die in Tabellen 1 und 2 angegebenen Inhaltsstoffe in den angegebenen Mengen (in Gewichtsteilen) mittels eines Planetenmischers unter Vakuum und Feuchtigkeitsausschluss gut vermischt, die jeweilige Zusammensetzung in eine luftdicht verschlossene Aluminiumkartusche abgefüllt und bei Raumtemperatur aufbewahrt.

Die Resultate Messungen wie unten beschreiben sind ebenfalls in Tabellen 1 und 2 angegeben.

Mit "(Ref.)" bezeichnete Zusammensetzungen sind Vergleichsbeispiele.

Jede Zusammensetzung wurde folgendermassen geprüft:
Als Mass für die Verarbeitbarkeit bzw. Applizierbarkeit der Zusammensetzung wurde die Auspresskraft bestimmt, also die benötigte Kraft, um eine Zusammensetzung aus einer Kartusche zu pressen. Dabei steht eine geringe Auspresskraft für eine gute Verarbeitbarkeit bzw. Applizierbarkeit.

Die **Auspresskraft** wurde bei 60°C bestimmt. Eine erste verschlossene Kartusche wurde während 7 Tagen bei 23°C gelagert und anschliessend während 2 Stunden bei 60°C temperiert. Dann wurde jeweils die Auspresskraft mittels eines Auspressgeräts (Zwick/Roell Z005) gemessen, indem eine Düse mit 3 mm Innendurchmesser auf die Kartusche aufgeschraubt und dann die benötigte Kraft gemessen wurde, um die Zusammensetzung mit einer Auspressgeschwindigkeit von 60 mm/min durch die Düse auszupressen. Der angegebene Wert ist ein Mittelwert aus den Kräften, die nach einem Auspressweg von 22 mm, 24 mm, 26 mm und 28 mm gemessen wurden. Werte unterhalb von 1200 N gelten als genügend und Werte unterhalb von 1100 N gelten als gut.

Zur Bestimmung der mechanischen Eigenschaften wurde jede Zusammensetzung zwischen zwei silikonbeschichteten Trennpapieren zu einem Film von 2 mm Dicke verpresst und während 14 Tagen im Normklima gelagert. Nach Entfernen der Trennpapiere wurden einige Prüfkörper ausgestanzt und wie folgt beschrieben geprüft:
Zur Bestimmung von **Zugfestigkeit, Bruchdehnung** und **E-Modul** bei 0.5-5% Dehnung wurden Hanteln mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min geprüft. Weitere Messungen wurden zur Bestimmung der Abrutschtendenz (Slip Down), der benötigten Druckkraft bei der Verklebung von Substraten (Compression Force) und der Adhäsionsstabilität unter Zugspannung (Delamination) durchgeführt, um die Eignung einer Zusammensetzung als Klebstoff als Scheibenkleber in der Automobilfertigung zu untersuchen. Die Messungen zur **Compression Force** (Druckkraftmessungen) wurden mittels eines Zwicki 1020 Testgeräts (Zwick Roell, Deutschland) und zugehöriger Software (TestXpert Advanced Edition; Testprogramm Compression Force) durchgeführt. Dazu wurde ein während 2h bei 60°C in einer Kartusche temperierter Klebstoff auf ein Polyethylenplättchen (L x B x H = 100 mm x 40 mm x 6 mm) als gerade Dreiecksraupe über die gesamte Länge aufgetragen. Die Kleberaupe hatte eine ursprüngliche Höhe von 10 mm, eine Basisbreite von 8 mm und eine Länge von 100 mm. Genau 5 Minuten nach Applikation der Klebstoffraupe bei 23 °C, 50% r.h. wurde das Plättchen mit der Klebstoffraupe in das Prüfgerät eingesetzt. Eine zweite Prüfplatte identischer Art wurde so auf die Kleberaupe gelegt, dass die Flächen der beiden Prüfplatten parallel zueinander lagen und die Platten ausgerichtet waren. Die Platten wurden dann mit einer konstanten Geschwindigkeit von 200 mm/min zusammengedrückt und die benötigte Druckkraft aufgezeichnet, bis eine komprimierte Klebstoffraupe mit einer Höhe von 4 mm und einer Breite von 9 bis 11 mm erhalten wurde. Die Messung über das Testprogramm lieferte so die Compression Force (Druckkraft), welche nötig war, den Klebstoff auf diese Dicke zusammenzudrücken (in N/cm). Der angegebene Wert ist ein Durchschnitt von mindestens 3 Messungen. Eine niedrigere Compression Force ist bevorzugt. Werte unterhalb von 4 N/cm gelten als genügend.

Die Tendenz zur **Delamination** (Adhäsionsverlust unter Zugspannung) einer Verklebung mit einer zu testenden Zusammensetzung wurde folgendermassen untersucht: Eine Kartusche mit der zu testenden Zusammensetzung wurde 2 Stunden vor Testapplikation in einem Ofen bei 60°C temperiert. Währenddessen wurden zwei Testplättchen vorbereitet. Der erste Testplättchen aus Floatglass (250 mm x 40 mm x 4 mm) wurde luftseitig mit Sika^{®} HydroPrep^{®}-110 (wasserbasierter Primer erhältlich von Sika Schweiz) vorbehandelt. Das zweite Testplättchen, ein mittels kathodischer Tauchlackierung (e-Coating) beschichtetes Stahlplättchen (L x B x H = 120 mm x 50 mm x 0.8 mm) wurde mit Heptan gereinigt. Das lackierte Stahlplättchen wurde in einer Halterung waagrecht eingespannt. Auf dem vorbehandelten Glasplättchen wurde eine 100 mm lange Dreiecksraupe vom zu testenden Klebstoff aufgetragen und das Plättchen mit der Raupe mittels 5 mm Platzhaltern (Spacern) eine Minute nach Applikation bei 23°C / 50% r.h. auf das eingespannte Stahlplättchen aufgedrückt, wobei die Klebstoffraupe komprimiert wurde. Dabei war die ursprüngliche Dreiecksraupe zwischen den beiden Plättchen auf eine Grösse von (L x B x H =) 100 mm x 10 mm x 5 mm verpresst. 2.5 Minuten nach dem Zusammenpressen wurde mittels einer Schraube ein Druck auf eine Seite (Breite) des Glasplättchens angefangen aufzubauen, so dass die Distanz der ursprünglich parallelen Plättchen auf einer Seite (Breite) vergrössert und eine Spreizung und damit eine Zugspannung einseitig auf die Verklebung ausgeübt wurde. Die dynamische Erhöhung der Zugspannung erfolgte durch eine kontinuierliche Erhöhung der Distanz der beiden Plättchen auf einer Seite (Breite) mit 0.5 mm/20s. Nach 6 Minuten und 20 Sekunden ab Beginn der Zugspannung wurde so kontinuierlich eine zusätzliche Distanz von 10 mm auf einer Seite (Breite) der ursprünglich parallelen Plättchen erzeugt. Während dieser Messung wurde kontinuierlich verfolgt, ab welcher Distanz (0 bis 10 mm) erste Delaminations-erscheinungen (Ablösungen des Klebstoffs vom Stahlplättchen) erkennbar waren. Die Auswertung erfolgte nach folgendem Schema:
Keine erkennbare Delamination bis 10 mm Distanz: «OK» Delamination beginnt zwischen 5 und 10 mm Distanz: «mittel» Delamination beginnt vor 5 mm Distanz: «hoch».

Erwünscht sind Werte mit Klassifizierung «OK», also Messungen, die keine Delamination (Adhäsionsverlust) der Verklebung zeigen.

Für die Messung des **Slip Down** (vertikales Abrutschverhalten eines Substrats im frisch applizierten Klebstoff) wurde eine quadratische Metallplatte (L x B = 320 mm x 320 mm) bereitgestellt, welche ein Gewicht von 4200 g aufwies. Entlang der Kanten auf einer Fläche dieser Platte wurde Malerklebeband angebracht. Auf dieses Malerklebeband wurden an allen vier Kanten eine Dreiecksraupe des zu testenden Klebstoffs appliziert, während die Platte auf einer Waage lag. Es wurde darauf geachtet, insgesamt 80 g des zu testenden Klebstoffs aufzubringen (jeweils 20 g pro Dreiecksraupe auf jeder Kante). Die Dreiecksraupen hatten jeweils eine Basisbreite von ca. 10 mm und eine Höhe von ca. 10 mm. Der Klebstoff war vorgängig bei 60°C während 2 h in der Kartusche temperiert worden und wurde direkt im warmen Zustand appliziert. Die Messung wurde in einem Normklimaraum (23°C, 50% r.h.) durchgeführt. 30 Sekunden nach Applikation der Klebstoffraupe wurde die Platte mit dem applizierten Klebstoff auf eine vertikal fest fixierte, zweite quadratische Platte (L x B = 400 mm x 400 mm), welche zudem über Distanzhalter (5 mm) verfügt, aufgedrückt, und zwar so, dass die beiden Plattenflächen parallel zu liegen kamen und die Flächen der Platten vertikal nach unten zeigten. Die Klebstoffraupe zwischen den Platten wurde mit Hilfe der Distanzhalter auf eine Dicke von 5 mm zusammengedrückt, während die erste, nicht fixierte Platte von unten vorerst gegen Abrutschen stabilisiert wurde. 30 Sekunden nach Kompression des Klebstoffs zwischen den Platten (60 Sekunden nach Applikation der Klebstoffraupen) wurde die Stabilisierungsvorrichtung der ersten, nicht fixierten Platte entfernt und die Messung des Abrutschverhaltens mittels eines digitalen Distanz-Messgeräts (Sony U30A) gemessen. Die Distanz, welche die nicht fixierte, erste Platte in der Folge durch das Eigengewicht abrutschte, beschreibt den Slip Down (in mm). Erwünscht sind niedrige Slip Down-Werte, wobei Werte unterhalb von 0.5 mm als genügend und Werte unterhalb 0.4 mm als gut gelten.

Die Resultate sind in Tabellen 1 und 2 angegeben.

Mit "(Ref.)" bezeichnete Zusammensetzungen sind Vergleichsbeispiele.

Die Daten in Tabellen 1 und 2 zeigen, dass nur die erfindungsgemässen Zusammensetzungen alle diese Eigenschaften kombiniert aufweisen. Gleichzeitig weisen die erfindungsgemässen Zusammensetzungen gute mechanische Eigenschaften (Zugfestigkeit und Bruchdehnung) und damit eine optimale Eignung als elastische strukturelle Klebstoffe.

Zusammensetzungen, welche eine Auspresskraft von < 1200 N, eine Compression Force < 4 N/cm, ein Slip Down von < 0.5 mm, sowie eine Delamination klassifiziert als «OK» aufweisen, sind optimal geeignet als Klebstoffe für die Automobilindustrie, insbesondere als Scheibenklebstoffe. Sie weisen eine gute Applizierbarkeit für automatische Anwendungen, sowie gute Anfangsfestigkeit und gute Adhäsionsstabilität auf.

Zusammensetzungen, welche weniger als 20 Gew.-% Russ enthalten, zeigen einen zu hohen Slip Down.

**Tabelle 1: Zusammensetzung (in Gewichtsteilen) und Eigenschaften von Z1 bis Z8. ¹ HDI-Trimerisat (Isocyanurat). ² 3-Glycidoxypropyltrimethoxysilan. ³ Diisononylphthalat (DINP). ⁴ Tosylisocyanat. ⁵ Dioctylzinndiketanoat 4 Gew.-% in DINP. ⁶ enthält 20 Gewichts-% DIDP. "n.b." steht für "nicht bestimmt".**

| | **Zusammensetzung** | **Z1** | **Z2** | **Z3 (Ref.)** | **Z4 (Ref.)** | **Z5 (Ref.)** | **Z6 (Ref.)** | **Z7 (Ref.)** | **Z8 (Ref.)** |
|---|---|---|---|---|---|---|---|---|---|
| | **Polymer P1-1** | 33.5 | 33.5 | - | - | - | - | - | - |
| | **Polymer P1-2** | 9.0 | 9.0 | - | - | - | - | - | - |
| | **Polymer PR1a** | - | - | 31 | 33.5 | 33.5 | 30 | 30 | 30 |
| | **Polymer PR1b ⁶** | - | - | 22 | 9.0 | 9.0 | 21 | 21 | 21 |
| | **Polymer P3-1** | 1.5 | 1.5 | - | 1.5 | 1.5 | - | - | - |
| | Oligomer¹ | 2.5 | 2.5 | 2.5 | 2.5 | 2.5 | 2.5 | 2.5 | 2.5 |
| | Epoxysilan ² | 0.2 | 0.2 | 0.2 | 0.2 | 0.2 | 0.2 | 0.2 | 0.2 |
| | Weichmacher³ | 15.8 | 12.3 | 9.7 | 15.8 | 12.3 | 11.7 | 12.7 | 13.7 |
| | Trockner⁴ | 0.1 | 0.1 | 0.1 | 0.1 | 0.1 | 0.1 | 0.1 | 0.1 |
| | Russ | 23 | 23 | 25 | 23 | 23 | 24 | 23 | 22 |
| | Kaolin | 13.5 | - | 8.6 | 13.5 | - | 9.6 | 9.6 | 9.6 |
| | Kreide | - | 17.0 | - | - | 17.0 | - | - | - |
| | Katalysator⁵ | 0.9 | 0.9 | 0.9 | 0.9 | 0.9 | 0.9 | 0.9 | 0.9 |
| Auspresskraft [N] | | 981 | 1067 | 1600 | 1310 | 1468 | 1376 | 1081 | 879 |
| Slip Down [mm] | | 0.3 | 0.2 | 0.2 | 0.2 | 0.3 | 0.2 | 0.5 | 0.9 |
| Compression Force [N/cm] | | 2.7 | 3.1 | n.b. | n.b. | n.b. | n.b. | n.b. | n.b. |
| Zugfestigkeit [MPa] | | 10.4 | 9.8 | 12 | n.b. | n.b. | n.b. | n.b. | n.b. |
| Bruchdehnung [%] | | 416 | 479 | 412 | n.b. | n.b. | n.b. | n.b. | n.b. |
| E-Modul [MPa] | | 8.3 | 8.8 | 11.3 | n.b. | n.b. | n.b. | n.b. | n.b. |
| Delamination [-] | | OK | OK | OK | OK | OK | OK | OK | OK |

**Tabelle 2: Zusammensetzung (in Gewichtsteilen) und Eigenschaften von Z9 bis Z17. ¹ HDI-Trimerisat (Isocyanurat). ² 3-Glycidoxypropyltrimethoxysilan. ³ Diisononylphthalat (DINP). ⁴ Tosylisocyanat. ⁵ Dioctylzinndiketanoat 4 Gew.-% in DINP. ⁶ enthält 20 Gewichts-% DIDP. * Messplatte rutschte spontan ab (massiver Slip Down). "n.b." steht für "nicht bestimmt".**

| **Zusammensetzung** | | **Z9 (Ref.)** | **Z10 (Ref.)** | **Z11** | **Z12** | **Z13** | **Z14** | **Z15** | **Z16 (Ref.)** | **Z17 (Ref.)** |
|---|---|---|---|---|---|---|---|---|---|---|
| | **Polymer P1-1** | - | 34.0 | 32.5 | 31 | 32.0 | 33.25 | 33.5 | 32.0 | - |
| | **Polymer P1-2** | - | 9.0 | 9.0 | 9.0 | 9.0 | 9.0 | 9.0 | 8.0 | 36.8 |
| | **Polymer PR1a** | 33.5 | - | - | - | - | - | - | - | - |
| | **Polymer PR1b** ⁶ | 8 | - | - | - | - | - | - | - | - |
| | **Polymer P2-1** | 3.0 | - | - | - | 0.5 | 0.75 | - | - | 2.5 |
| | **Polymer P3-1** | - | - | 1.5 | 3.0 | 1.5 | - | - | 1.0 | - |
| | **Polymer P3-2** | - | - | - | - | - | - | 1.5 | - | 2.0 |
| | Oligomer¹ | 2.5 | 2.5 | 2.5 | 2.5 | 2.5 | 2.5 | 2.5 | 2.5 | - |
| | Epoxysilan ² | 0.2 | 0.1 | 0.1 | 0.1 | 0.1 | 0.1 | 0.1 | 0.2 | - |
| | Weichmacher³ | 20.8 | 14.2 | 14.2 | 14.2 | 14.2 | 14.2 | 12.6 | 12.3 | 18.8 |
| | Trockner ⁴ | 0.1 | - | - | - | - | - | - | 0.1 | 0.1 |
| | Russ | 22.5 | 23.0 | 23.0 | 23.0 | 23.0 | 23.0 | 23.0 | 18.0 | 18.5 |
| | Kaolin | 8.5 | - | - | - | - | - | - | - | - |
| | Kreide | - | 16.5 | 16.5 | 16.5 | 16.5 | 16.5 | 17.0 | 25.0 | 21.5 |
| | Katalysator ⁵ | 0.9 | 0.7 | 0.7 | 0.7 | 0.7 | 0.7 | 0.9 | 0.9 | - |
| Auspresskraft [N] | | 530 | 807 | 992 | 1004 | 951 | 877 | 1097 | 491 | 412 |
| Slip Down [mm] | | 0.2 | 1.8 | 0.2 | 0.2 | 0.2 | 0.3 | 0.1 | * | 5.0 |
| Compression Force [N/cm] | | 4.0 | 2.1 | 2.8 | 3.1 | 2.9 | 2.5 | 3.7 | 1.3 | n.b. |
| Zugfestigkeit [MPa] | | 8.8 | 10.3 | 10.5 | 9.9 | 10.3 | 9.7 | 12.1 | 6.8 | 8.22 |
| Bruchdehnung [%] | | 321 | 556 | 554 | 431 | 521 | 518 | 546 | 412 | 589 |
| E-Modul [MPa] | | 9.1 | 7.8 | 8.4 | 9.2 | 8.7 | 8.6 | 11.1 | 6.2 | 5.48 |
| Delamination [-] | | hoch | OK | OK | OK | OK | OK | OK | OK | n.b. |

## Patentansprüche

1. Feuchtigkeitshärtende Polyurethan-Zusammensetzung enthaltend
- mindestens ein Isocyanatgruppen-haltiges Polyetherurethan-Polymer **P1** mit einem Gehalt an monomeren Diisocyanaten von höchstens 0.5 Gewichts-% erhalten aus der Umsetzung von mindestens einem monomeren Diisocyanat mit mindestens einem Polyetherpolyol mit einem mittleren Molekulargewicht Mₙ von mehr als 2'500 g/mol in einem NCO/OH-Verhältnis von mindestens 3/1 und nachfolgender Entfernung eines Grossteils der monomeren Diisocyanate mittels eines geeigneten Trennverfahrens, und
- mehr als 20 Gewichts-% Russ, bezogen auf die gesamte Zusammensetzung, und
- optional höchstens 2 Gewichts-% eines bei Raumtemperatur festen Polyurethan-Polymers **P2,** bezogen auf die gesamte Zusammensetzung, erhalten aus der Umsetzung von mindestens einem monomeren Diisocyanat mit mindestens einem mindestens teilkristallinen Polyester- oder Polycarbonatpolyol in einem NCO/OH-Verhältnis von mindestens 1.3/1, und
- optional bis zu 5 Gewichts-% eines Polyetherurethan-Polymers **P3,** bezogen auf die gesamte Zusammensetzung, erhalten aus der Umsetzung von mindestens einem monomeren Diisocyanat mit mindestens einem Polyetherdiol mit einem mittleren Molekulargewicht Mₙ von höchstens 2'500 g/mol in einem NCO/OH-Verhältnis von mindestens 1.3/1,
mit der Massgabe, dass mindestens eines der Polymere **P2** und **P3** in der Zusammensetzung enthalten ist.

2. Feuchtigkeitshärtende Zusammensetzung gemäss Anspruch 1, **dadurch gekennzeichnet, dass** das mindestens eine Polymer **P1** einen NCO-Gehalt im Bereich von 1 bis 5 Gewichts-% aufweist und mindestens 80 Gewichts-% 1,2-Propylenoxy-Einheiten im Polyether-Segment aufweist.

3. Feuchtigkeitshärtende Zusammensetzung gemäss einem der Ansprüche 1 bis 2, **dadurch gekennzeichnet, dass** die Isocyanatgruppen der Polymere **P1**, **P2** und/oder **P3** abgeleitet sind von 4,4'-Diphenylmethandiisocyanat.

4. Feuchtigkeitshärtende Zusammensetzung gemäss einem der Ansprüche 1 bis 3, **dadurch gekennzeichnet, dass** das Polymer **P1** mindestens ein Polymer **P1a**, erhalten aus einem Polyetherdiol, und mindestens ein Polymer **P1b**, erhalten aus einem Polyethertriol, umfasst.

5. Feuchtigkeitshärtende Zusammensetzung gemäss einem der Ansprüche 1 bis 4, **dadurch gekennzeichnet, dass** die Zusammensetzung zwischen 20.5 und 25 Gewichts-% Russ, bezogen auf die gesamte Zusammensetzung, umfasst.

6. Feuchtigkeitshärtende Zusammensetzung gemäss einem der Ansprüche 1 bis 5, **dadurch gekennzeichnet, dass** die Zusammensetzung zwischen 0.5 und 1.5 Gewichts-% Polymer **P2**, bezogen auf die gesamte Zusammensetzung, enthält.

7. Feuchtigkeitshärtende Zusammensetzung gemäss einem der Ansprüche 1 bis 6, **dadurch gekennzeichnet, dass** die Zusammensetzung zwischen 0.5 und 2 Gewichts-% Polymer **P3**, bezogen auf die gesamte Zusammensetzung, enthält.

8. Feuchtigkeitshärtende Zusammensetzung gemäss Anspruch 7, **dadurch gekennzeichnet, dass** Polymer **P3** auf einem Poly(oxy-1,4-butylen)diol basiert.

9. Feuchtigkeitshärtende Zusammensetzung gemäss einem der Ansprüche 1 bis 8, **dadurch gekennzeichnet, dass** die Zusammensetzung zwischen 10 und 30 Gewichts-% nicht verdickenden Füllstoff, bezogen auf die gesamte Zusammensetzung, enthält.

10. Feuchtigkeitshärtende Zusammensetzung gemäss Anspruch 9, **dadurch gekennzeichnet, dass** der nicht verdickende Füllstoff ausgewählt ist aus Kreide und Kaolin und Mischungen davon.

11. Feuchtigkeitshärtende Zusammensetzung gemäss einem der Ansprüche 1 bis 10, **dadurch gekennzeichnet, dass** zusätzlich mindestens ein weiterer Bestandteil ausgewählt aus Silan-Haftvermittlern, blockierten Aminen, Diisocyanat-Oligomeren, Trocknungsmitteln, Katalysatoren und Stabilisatoren enthalten ist.

12. Feuchtigkeitshärtende Zusammensetzung gemäss Anspruch 11, **dadurch gekennzeichnet, dass** sie, jeweils bezogen auf die gesamte Zusammensetzung
- 25 bis 50 Gewichts-% Polymere **P1**,
- optional bis zu 1.5 Gewichts-% Polymer **P2**,
- optional bis zu 2 Gewichts-% Polymer **P3**,
- 21 bis 25 Gewichts-% Russ,
- 10 bis 30 Gewichts-% nicht verdickende Füllstoffe,
- 10 bis 20 Gewichts-% Weichmacher,
und gegebenenfalls weitere Bestandteile, insbesondere SilanHaftvermittler, blockierte Amine, Diisocyanat-Oligomere, Trocknungsmittel, Katalysatoren und/oder Stabilisatoren, enthält, mit der Massgabe, dass mindestens eines der Polymere **P2** und **P3** in der Zusammensetzung enthalten ist.

13. Feuchtigkeitshärtende Zusammensetzung gemäss Anspruch 11 oder 12, **dadurch gekennzeichnet, dass** die Zusammensetzung mindestens 0.5 Gewichts-% Polymer **P2** und/oder mindestens 0.5 Gewichts-% Polymer **P3**, bezogen auf die gesamte Zusammensetzung, enthält.

14. Verfahren zum Verkleben oder Abdichten, umfassend die Schritte
(i) Applizieren der feuchtigkeitshärtenden Zusammensetzung gemäss einem der Ansprüche 1 bis 13
- auf ein erstes Substrat und Kontaktieren der Zusammensetzung mit einem zweiten Substrat innerhalb der Offenzeit der Zusammensetzung, oder
- auf ein erstes und auf ein zweites Substrat und Fügen der beiden Substrate innerhalb der Offenzeit der Zusammensetzung, oder
- zwischen zwei Substrate,
(ii) Aushärten der Zusammensetzung durch Kontakt mit Feuchtigkeit.

15. Artikel, erhalten aus dem Verfahren gemäss Anspruch 14.

## Claims

1. Moisture-curing polyurethane composition comprising
- at least one polyether urethane polymer P1 containing isocyanate groups and having a monomeric diisocyanate content of not more than 0.5% by weight, obtained from the reaction of at least one monomeric diisocyanate with at least one polyether polyol having an average molecular weight Mₙ of more than 2500 g/mol in an NCO/OH ratio of at least 3/1, and subsequent removal of a majority of the monomeric diisocyanates by means of a suitable separation method, and
- more than 20% by weight of carbon black, based on the overall composition, and
- optionally not more than 2% by weight of a room temperature solid polyurethane polymer P2, based on the overall composition, obtained from the reaction of at least one monomeric diisocyanate with at least one at least semicrystalline polyester polyol or polycarbonate polyol in an NCO/OH ratio of at least 1.3/1, and
- optionally up to 5% by weight of a polyether urethane polymer P3, based on the overall composition, obtained from the reaction of at least one monomeric diisocyanate with at least one polyether diol having an average molecular weight Mₙ of not more than 2500 g/mol in an NCO/OH ratio of at least 1.3/1,
with the proviso that at least one of the polymers P2 and P3 is present in the composition.

2. Moisture-curing composition according to Claim 1, **characterized in that** at least one polymer P1 has an NCO content in the range from 1% to 5% by weight and at least 80% by weight of 1,2-propyleneoxy units in the polyether segment.

3. Moisture-curing composition according to either of Claims 1 and 2, **characterized in that** the isocyanate groups of polymers P1, P2 and/or P3 are derived from diphenylmethane 4,4'-diisocyanate.

4. Moisture-curing composition according to any of Claims 1 to 3, **characterized in that** polymer P1 comprises at least one polymer P1a obtained from a polyether diol, and at least one polymer P1b obtained from a polyether triol.

5. Moisture-curing composition according to any of Claims 1 to 4, **characterized in that** the composition comprises between 20.5% and 25% by weight of carbon black, based on the overall composition.

6. Moisture-curing composition according to any of Claims 1 to 5, **characterized in that** the composition contains between 0.5% and 1.5% by weight of polymer P2, based on the overall composition.

7. Moisture-curing composition according to any of Claims 1 to 6, **characterized in that** the composition contains between 0.5% and 2% by weight of polymer P3, based on the overall composition.

8. Moisture-curing composition according to Claim 7, **characterized in that** polymer P3 is based on a poly(oxy-1,4-butylene)diol.

9. Moisture-curing composition according to any of Claims 1 to 8, **characterized in that** the composition contains between 10% and 30% by weight of nonthickening filler, based on the overall composition.

10. Moisture-curing composition according to Claim 9, **characterized in that** the nonthickening filler is selected from chalk and kaolin and mixtures thereof.

11. Moisture-curing composition according to any of Claims 1 to 10, **characterized in that** at least one further constituent selected from silane adhesion promoters, blocked amines, diisocyanate oligomers, drying agents, catalysts and stabilizers is additionally present.

12. Moisture-curing composition according to Claim 11, **characterized in that** it contains, based in each case on the overall composition,
- 25% to 50% by weight of polymers P1,
- optionally up to 1.5% by weight of polymer P2,
- optionally up to 2% by weight of polymer P3,
- 21% to 25% by weight of carbon black,
- 10% to 30% by weight of nonthickening fillers,
- 10% to 20% by weight of plasticizers,
and optionally further constituents, in particular silane adhesion promoters, blocked amines, diisocyanate oligomers, drying agents, catalysts and/or stabilizers, with the proviso that at least one of polymers P2 and P3 is present in the composition.

13. Moisture-curing composition according to Claim 11 or 12, **characterized in that** the composition contains at least 0.5% by weight of polymer P2 and/or at least 0.5% by weight of polymer P3, based on the overall composition.

14. Method of bonding or sealing, comprising the steps of
(i) applying the moisture-curing composition according to any of Claims 1 to 13
- to a first substrate and contacting the composition with a second substrate within the open time of the composition, or
- to a first and to a second substrate and joining the two substrates within the open time of the composition, or
- between two substrates,
(ii) curing the composition by contact with moisture.

15. Article obtained from the method according to Claim 14.

## Revendications

1. Composition de polyuréthane durcissant sous l'effet de l'humidité contenant
- au moins un polymère polyétheruréthane P1 contenant des groupes isocyanates, ayant une teneur en diisocyanates monomères d'au plus 0,5 % en poids, obtenu par la réaction d'au moins un diisocyanate monomère avec au moins un polyétherpolyol ayant un poids moléculaire moyen Mₙ supérieur à 2 500 g/mol, en un rapport NCO/OH d'au moins 3/1, et l'élimination ultérieure de la majeure partie des diisocyanates monomères au moyen d'un procédé de séparation approprié, et
- plus de 20 % en poids de noir de carbone par rapport à la totalité de la composition, et
- facultativement, au plus 2 % en poids d'un polymère polyuréthane P2 solide à température ambiante, par rapport à la totalité de la composition, obtenu par la réaction d'au moins un diisocyanate monomère avec au moins un polyester ou polycarbonate polyol au moins partiellement cristallin en un rapport NCO/OH d'au moins 1,3/1, et
- facultativement, jusqu'à 5 % en poids d'un polymère polyétheruréthane P3, par rapport à la totalité de la composition, obtenu par la réaction d'au moins un diisocyanate monomère avec au moins un polyétherdiol ayant un poids moléculaire moyen Mₙ d'au plus 2 500 g/mol, en un rapport NCO/OH d'au moins 1,3/1,
à condition qu'au moins l'un des polymères P2 et P3 soit contenu dans la composition.

2. Composition durcissant sous l'effet de l'humidité selon la revendication 1, **caractérisée en ce que** l'au moins un polymère P1 présente une teneur en NCO dans la plage de 1 à 5 % en poids et présente au moins 80 % en poids d'unités 1,2-propylèneoxy dans le segment polyéther.

3. Composition durcissant sous l'effet de l'humidité selon l'une des revendications 1 à 2, **caractérisée en ce que** les groupes isocyanate des polymères P1, P2 et/ou P3 sont dérivés de diisocyanate de 4,4'-diphénylméthane.

4. Composition durcissant sous l'effet de l'humidité selon l'une des revendications 1 à 3, **caractérisée en ce que** le polymère P1 comprend au moins un polymère P1a obtenu à partir d'un polyétherdiol et au moins un polymère P1b obtenu à partir d'un polyéthertriol.

5. Composition durcissant sous l'effet de l'humidité selon l'une quelconque des revendications 1 à 4, **caractérisée en ce que** la composition comprend entre 20,5 et 25 % en poids de noir de carbone, par rapport à la totalité de la composition.

6. Composition durcissant sous l'effet de l'humidité selon l'une quelconque des revendications 1 à 5, **caractérisée en ce que** la composition contient entre 0;5 et 1,5 % en poids de polymère P2, par rapport à la totalité de la composition.

7. Composition durcissant sous l'effet de l'humidité selon l'une quelconque des revendications 1 à 6, **caractérisée en ce que** la composition contient entre 0;5 et 2 % en poids de polymère P3, par rapport à la totalité de la composition.

8. Composition durcissant sous l'effet de l'humidité selon la revendication 7, **caractérisée en ce que** le polymère P3 est à base de poly(oxy-1,4-butylène)diol.

9. Composition durcissant sous l'effet de l'humidité selon l'une quelconque des revendications 1 à 8, **caractérisée en ce que** la composition contient entre 10 et 30 % en poids de charge non épaississante, par rapport à la totalité de la composition.

10. Composition durcissant sous l'effet de l'humidité selon la revendication 9, **caractérisée en ce que** la charge non épaississante est choisie parmi la craie et le kaolin et leurs mélanges.

11. Composition durcissant sous l'effet de l'humidité selon l'une des revendications 1 à 10, **caractérisée en ce qu'**en plus, au moins un autre constituant choisi parmi les promoteurs d'adhésion silane, les amines bloquées, les oligomères de diisocyanate, les agents siccatifs, les catalyseurs et les stabilisants est contenu.

12. Composition durcissant sous l'effet de l'humidité selon la revendication 11, **caractérisée en ce qu'**elle contient, par rapport à la totalité de la composition
- 25 à 50% en poids de polymères P1,
- facultativement, jusqu'à 1,5 % en poids de polymère P2,
- facultativement, jusqu'à 2 % en poids de polymère P3,
- 21 à 25 % en poids de noir de carbone,
- 10 à 30 % en poids de charges non épaississantes,
- 10 à 20% en poids de plastifiant,
et, le cas échéant, d'autres composants, en particulier des promoteurs d'adhésion silane, des amines bloquées, des oligomères de diisocyanate, des agents siccatifs, des catalyseurs et/ou des stabilisants, à condition qu'au moins l'un des polymères P2 et P3 soit contenu dans la composition.

13. Composition durcissant sous l'effet de l'humidité selon la revendication 11 ou 12, **caractérisée en ce que** la composition contient au moins 0,5 % en poids de polymère P2 et/ou au moins 0,5 % en poids de polymère P3, par rapport à la totalité de la composition.

14. Procédé pour le collage ou le bouchage comprenant les étapes :
(i) application de la composition durcissant sous l'effet de l'humidité selon l'une des revendications 1 à 13
- sur un premier substrat et mise en contact de la composition avec un deuxième substrat dans le temps ouvert de la composition ou
- sur un premier et sur un deuxième substrat et assemblage des deux substrats dans le temps ouvert de la composition ou
- entre deux substrats,
(ii) durcissement de la composition par contact avec de l'humidité.

15. Article, obtenu à partir du procédé selon la revendication 14.
